# EUROPEAN PATENT APPLICATION

(11) **EP 4 497 553 A1**
(43) Date of publication of application: **29.01.2025**
(21) Application number: 23774396.8
(22) Date of filing: 27.02.2023
(51) Int. Cl.: B25J 9/22, G05B 19/42, B23K 9/127

(54) **OFFLINE TEACHING DEVICE AND OFFLINE TEACHING SYSTEM**

(30) Priority: 23.03.2022 JP 2022047240
(71) Applicant: Panasonic Intellectual Property Management Co., Ltd., Kadoma-shi, Osaka 571-0057 (JP)
(72) Inventor: HIRAYAMA Masaya, Kadoma-shi, Osaka 571-0057 (JP); OKUMA Katsuaki, Kadoma-shi, Osaka 571-0057 (JP); OKAZAKI Yoshiyuki, Kadoma-shi, Osaka 571-0057 (JP)
(74) Representative: Novagraaf International SA
(86) International application number: PCT/JP2023/007174
(87) International publication number: WO 2023/181797

(57) **Abstract**

An offline teaching device includes: an acquisition unit configured to acquire, from an inspection robot that inspects a workpiece to be produced, information on positions of the workpiece and a welding robot; a calculation unit configured to calculate a position of the workpiece and a position of the welding robot; a conversion unit configured to convert a position of the workpiece with respect to the inspection robot into a position of the workpiece with respect to the welding robot; a correction unit configured to correct a position of a teaching point included in a welding teaching program used for the welding and correct a position of a teaching point included in an inspection teaching program used for the inspection of the produced workpiece; and an output unit configured to output the corrected welding teaching program.

## Description

### TECHNICAL FIELD

The present disclosure relates to an offline teaching device and an offline teaching system.

### BACKGROUND ART

Patent Literature 1 discloses an offline teaching device that displays, in a model diagram, an operation trajectory of a robot when a teaching program is executed and displays a part of a plurality of position detection commands and a part of a plurality of welding commands. The offline teaching device includes a display unit that displays a teaching program and a model diagram, a storage unit that stores commands constituting the teaching program and model data of the model diagram, and a control unit that controls the display unit and the storage unit. The teaching program includes a position detection program constituted by the plurality of position detection commands and a welding program constituted by the plurality of welding commands. Here, the commands constituting the teaching program, the position detection program, and the welding program are each created by an operator.

### CITATION LIST

### PATENT LITERATURE

Patent Literature 1: WO2016/021130

### SUMMARY OF INVENTION

### Technical Problem

The present disclosure provides an offline teaching device and an offline teaching system that more efficiently correct teaching points of teaching programs used by different robots.

### Solution to Problem

The present disclosure provides an offline teaching device including: an acquisition unit configured to acquire, from an inspection robot that inspects a workpiece produced by welding, information on positions of the workpiece and a welding robot that executes the welding; a calculation unit configured to calculate a position of the workpiece and a position of the welding robot based on the information on the positions of the workpiece and the welding robot; a conversion unit configured to convert a position of the workpiece with respect to the inspection robot into a position of the workpiece with respect to the welding robot; a correction unit configured to correct a position of a teaching point included in a welding teaching program used for the welding based on the position of the workpiece with respect to the welding robot and correct a position of a teaching point included in an inspection teaching program used for the inspection of the produced workpiece based on the position of the workpiece with respect to the inspection robot; and an output unit configured to output the corrected welding teaching program.

The present disclosure provides an offline teaching system including: a welding robot control device configured to control a welding robot that produces a first workpiece by welding; and an inspection robot control device configured to control an inspection robot that inspects a produced second workpiece. The inspection robot control device is configured to acquire information on positions of the first workpiece, the second workpiece, and the welding robot with respect to the inspection robot, and calculate positional deviation amounts of the first workpiece and the second workpiece, and correct a position of a teaching point of an inspection teaching program used for inspection of the second workpiece based on the positional deviation amount of the second workpiece and transmit information of the positional deviation amount of the first workpiece to the welding robot control device. The welding robot control device is configured to convert the positional deviation amount of the first workpiece into a positional deviation amount of the first workpiece with respect to the welding robot based on the information of the positional deviation amount of the first workpiece transmitted from the inspection robot control device, and correct a position of a teaching point of a welding teaching program used for the welding based on the converted positional deviation amount of the first workpiece.

The present disclosure provides an offline teaching system including: a welding robot control device configured to control a welding robot that produces a first workpiece by welding; and an inspection robot control device configured to control an inspection robot that inspects a produced second workpiece. The inspection robot control device is configured to acquire information on positions of the first workpiece, the second workpiece, and the welding robot with respect to the inspection robot, calculate positional deviation amounts of the first workpiece and the second workpiece, correct a position of a teaching point of an inspection teaching program used for inspection of the second workpiece based on the positional deviation amount of the second workpiece, and convert the positional deviation amount of the first workpiece into a positional deviation amount of the first workpiece with respect to the welding robot based on information of the positional deviation amount of the first workpiece, and transmit the positional deviation amount to the welding robot control device. The welding robot control device is configured to correct a position of a teaching point of a welding teaching program used for the welding based on the positional deviation amount of the first workpiece transmitted from the inspection robot control device.

### Advantageous Effects of Invention

According to the present disclosure, teaching points included in teaching programs used by different robots can be corrected more efficiently.

### BRIEF DESCRIPTION OF DRAWINGS

[FIG. 1] FIG. 1 is a schematic diagram showing a system configuration example of a welding system according to Embodiment 1.
[FIG. 2] FIG. 2 is a diagram illustrating an internal configuration example of a host device and a robot control device according to Embodiment 1.
[FIG. 3] FIG. 3 is a diagram illustrating an internal configuration example of the host device, the robot control device, and an inspection control device according to Embodiment 1.
[FIG. 4] FIG. 4 is a diagram illustrating a relation between a welding robot coordinate system and an inspection robot coordinate system.
[FIG. 5] FIG. 5 is a diagram illustrating an example of an alignment pattern. [FIG. 6] FIG. 6 is a diagram illustrating an example in which an alignment pattern is read. [FIG. 7] FIG. 7 is a diagram illustrating a scanning example of a welding torch. [FIG. 8] FIG. 8 is a diagram illustrating a calculation example of a positional deviation amount of a workpiece.
[FIG. 9] FIG. 9 is a flowchart illustrating a correction procedure example of a teaching program executed by the robot control device according to Embodiment 1. [FIG. 10] FIG. 10 is a diagram illustrating a use case example of a welding system according to a modification of Embodiment 1.
[FIG. 11] FIG. 11 is a diagram illustrating a measurement example of a position of the workpiece.
[FIG. 12] FIG. 12 is a sequence diagram illustrating a first correction procedure example of a teaching program executed by two robot control devices according to the modification of Embodiment 1.
[FIG. 13] FIG. 13 is a sequence diagram illustrating a second correction procedure example of the teaching program executed by the two robot control devices according to the modification of Embodiment 1.

### DESCRIPTION OF EMBODIMENTS

### (Background of Present Disclosure)

As disclosed in Patent Literature 1, in the related art, there is an offline teaching device that teaches a teaching program (for example, a position detection program, a welding program) including a work procedure, an operation trajectory, and the like to a robot such as a welding robot by using an offline teaching device. The robot executes work by reading various programs corresponding to work instructions based on the work instructions.

The operation trajectory includes a position of a teaching point indicating a position at which the robot should pass and reach. In general, a relative position with respect to the robot (that is, a position based on a coordinate system of the robot) is recorded in the teaching point. Therefore, when there is a positional deviation in a position of a work object (hereinafter referred to as a "workpiece") with respect to the robot and position correction of the teaching point is not executed, there is a problem that the robot cannot reach a machining site of the workpiece.

Here, the cause of the positional deviation of the workpiece is, for example, transfer, maintenance of the facility, a change in a machining condition of the workpiece, and individual difference in the workpiece. Examples of the positional deviation of the workpiece include that a position of the entire workpiece is equally deviated, that a position of each of the components constituting the workpiece is deviated, that a deviation amount is changed for each individual during the production of each of a plurality of workpieces (that is, a temporal change is large), that a temporal change of the deviation amount is small, and the like. A degree of influence on the work is different for each positional deviation form.

Accordingly, the position correction of the teaching point is preferably executed in accordance with the positional deviation form. However, since the number of teaching points may be several hundreds to several thousands depending on the workpiece, there is a problem that the man-hours required for correction are extremely large.

In addition, a robot that executes main welding on a workpiece to be produced may be different from a robot that measures a positional deviation between the workpiece and the robot. In such a case, it is difficult for the robot that executes main welding to recognize and correct the positional deviation between the workpiece and the robot.

Hereinafter, embodiments specifically disclosing an offline teaching device and an offline teaching system according to the present disclosure will be described in detail with reference to the drawings as appropriate. However, unnecessarily detailed descriptions may be omitted. For example, detailed descriptions of already well-known matters and redundant descriptions of substantially the same configuration may be omitted. This is to avoid unnecessary redundancy of the following description and to facilitate understanding of those skilled in the art. The accompanying drawings and the following descriptions are provided for those skilled in the art to fully understand the present disclosure and are not intended to limit the subject matters described in the claims.

Hereinafter, a target (for example, metal) to be subjected to main welding is defined as an "original workpiece", and a target produced (manufactured) by the main welding is defined as a "workpiece". The "workpiece" is not limited to a workpiece produced by the main welding executed once, and may be a composite workpiece produced by the main welding executed two or more times. In addition, a step of producing a workpiece by joining an original workpiece and another original workpiece to each other by a welding robot is defined as "main welding".

### (Configuration of Welding System)

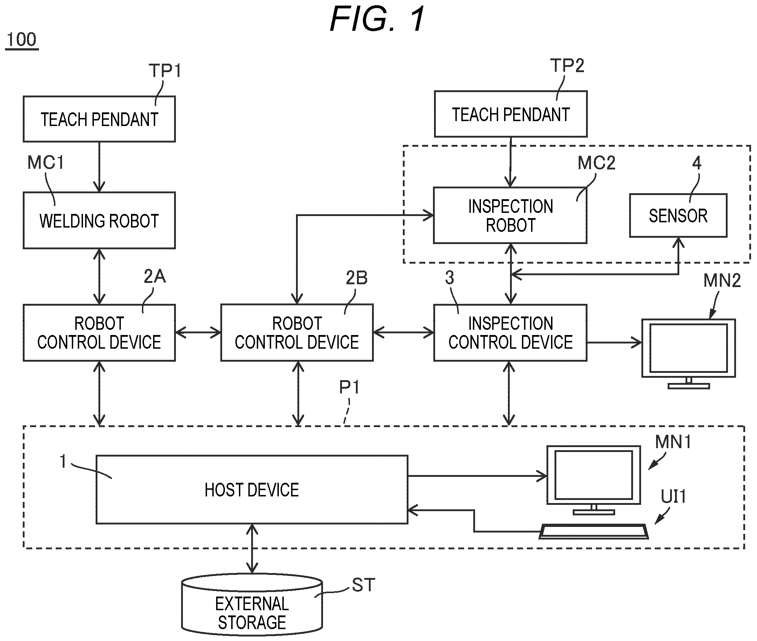

FIG. 1 is a schematic diagram illustrating a system configuration example of a welding system 100 according to Embodiment 1. The welding system 100 as an example of the offline teaching system is a configuration including a host device 1 connected to each of an external storage ST, an input interface UI1, and a monitor MN1, robot control devices 2A and 2B, an inspection control device 3, a sensor 4, a welding robot MC1, an inspection robot MC2, and a monitor MN2. Teach pendants TP1 and TP2 are not essential components and may be omitted. The monitor MN2 is not an essential component and may be omitted.

The host device 1 collectively controls the start and completion of the main welding executed by the welding robot MC1 via the robot control device 2A. For example, the host device 1 reads out, from the external storage ST, welding-related information input or set in advance by a user (for example, a welding operator or a system administrator. The same applies hereinafter.), generates a main welding execution command including contents of the welding-related information by using the welding-related information, and transmits the main welding execution command to the corresponding robot control device 2A. When the main welding by the welding robot MC1 is completed, the host device 1 receives, from the robot control device 2A, a main welding completion report indicating that the main welding by the welding robot MC1 is completed, updates to a status indicating that the corresponding main welding is completed, and records the status in the external storage ST.

The main welding execution command described above is not limited to being generated by the host device 1, and may be generated by, for example, an operation panel of a facility (for example, a programmable logic controller (PLC)) in a factory or the like where the main welding is executed, or an operation panel of the robot control device 2A (for example, the teach pendant TP1). The teach pendant TP1 is a device for operating the welding robot MC1 connected to the robot control device 2A.

The host device 1 collectively controls the start and completion of bead appearance inspection using the robot control device 2B, the inspection control device 3, and the sensor 4. For example, upon receiving the main welding completion report from the robot control device 2B, the host device 1 generates a bead appearance inspection execution command of a workpiece produced by the welding robot MC1 and transmits the execution command to each of the robot control device 2B and the inspection control device 3. When the bead appearance inspection is completed, the host device 1 receives, from the inspection control device 3, an appearance inspection report indicating that the bead appearance inspection is completed, updates to a status indicating that the corresponding bead appearance inspection is completed, and records the status in the external storage ST.

Here, the welding-related information is information indicating contents of the main welding executed by the welding robot MC1, and is created in advance for each step of the main welding and is registered in the external storage ST. The welding-related information includes, for example, the number of original workpieces used in the main welding, workpiece information including an ID of the original workpiece used in the main welding, lot information, a name, and a welding portion of the original workpiece (for example, information on a welding line and position information of the welding line), a scheduled execution date on which the main welding is executed, the number of original workpieces to be produced, and various welding conditions during the main welding. The welding-related information is not limited to data of the items described above, and may further include information such as created welding operation teaching program and inspection operation teaching program (see description below), welding operation setting information, inspection operation setting information, and the like used to create the teaching programs.

In addition, the welding condition includes, for example, a material and a thickness of the original workpiece, a material and a wire diameter of a welding wire 301, a type of shielding gas, a flow rate of the shielding gas, a set average value of a welding current, a set average value of a welding voltage, a feeding speed and a feeding amount of the welding wire 301, the number of times of welding, and welding time. Further, in addition to the above, the welding condition may include, for example, information indicating a type of the main welding (for example, TIG welding, MAG welding, and pulse welding), a moving speed and a moving time of a manipulator 200A.

Based on the main welding execution command transmitted from the host device 1 or the robot control device 2B, the robot control device 2A causes the welding robot MC1 to start execution of the main welding using an original workpiece designated by the execution command. The welding-related information described above is not limited to being managed by the host device 1 with reference to the external storage ST, and may be managed by, for example, the robot control device 2A. In this case, since the robot control device 2A can grasp a state in which the main welding is completed, an actual execution date may be managed instead of a scheduled execution date, on which a welding step is scheduled to be executed, in the welding-related information. Although a type of the main welding is not limited in the present specification, in order to make the description easy to understand, a step of joining a plurality of original workpieces to produce one workpiece will be described as an example.

The host device 1 is separately connected to the monitor MN1, the input interface UI1, and the external storage ST so as to allow data input to and output from therebetween, and is further connected to the robot control devices 2A and 2B and the inspection control device 3 so as to allow data communication therebetween. The host device 1 may be a terminal device P1 that integrally includes the monitor MN1 and the input interface UI1, and may further integrally include the external storage ST. In this case, the terminal device P1 is a personal computer (PC) that is used by the user before the main welding is executed. The terminal device P1 is not limited to the PC described above, and may be a computer device having a communication function, such as a smartphone or a tablet terminal.

The monitor MN1 may be formed using a display device such as a liquid crystal display (LCD) or an organic electroluminescence (EL). The monitor MN1 may display, for example, a screen showing a notification indicating that the main welding is completed or a notification indicating that the bead appearance inspection is completed, which is output from the host device 1. In addition, a speaker (not illustrated) may be connected to the host device 1 instead of the monitor MN1 or together with the monitor MN1, and the host device 1 may output, via the speaker, a sound of a content indicating that the main welding is completed or a content indicating that the bead appearance inspection is completed.

The input interface UI1 is a user interface that detects an input operation of the user and outputs the input operation to the host device 1, and may be formed using, for example, a mouse, a keyboard, or a touch panel. The input interface UI1 receives, for example, an input operation when the user creates the welding-related information or an input operation when the main welding execution command is transmitted to the robot control device 2A.

The external storage ST is formed using, for example, a hard disk drive or a solid state drive. The external storage ST stores, for example, data of the welding-related information created for each main welding, a status (a production status) of a workpiece Wk produced by the main welding, and workpiece information on the workpiece Wk (see above). The external storage ST may store, for each welding line, a welding operation teaching program and an inspection operation teaching program that are created by the robot control device 2A or the robot control device 2B. The welding operation teaching program and the inspection operation teaching program will be described later.

The robot control device 2A is separately connected to the host device 1 and the robot control device 2B so as to allow data communication therebetween, and is connected to the welding robot MC1 so as to allow data communication therebetween. Upon receiving the main welding execution command transmitted from the host device 1, the robot control device 2A creates a main welding program based on a welding operation teaching program corresponding to the execution command, and controls the welding robot MC1 to execute the main welding.

In addition, the robot control device 2A acquires the welding operation teaching program transmitted from the robot control device 2B or correction information (for example, positional deviation information) on a teaching point included in the welding operation teaching program. The robot control device 2A creates a main welding program based on the acquired welding operation teaching program, and controls the welding robot MC 1 to execute the main welding.

When the completion of the main welding is detected, the robot control device 2A as an example of the welding control device generates a main welding completion report indicating that the main welding is completed, and notifies the host device 1 of the main welding completion report. Accordingly, the host device 1 can appropriately detect the completion of the main welding by the robot control device 2A. A method of detecting the completion of the main welding by the robot control device 2A may be, for example, a method of determining completion of the main welding based on a signal indicating the completion of the main welding from a sensor (not illustrated) provided in a wire feeding device 300, or may be a known method, and contents of the method of detecting the completion of the main welding are not limited.

The robot control device 2B as an example of the offline teaching device and the inspection control device is separately connected to the host device 1, the robot control device 2A, and the inspection control device 3 so as to allow data communication therebetween, and is connected to the inspection robot MC2 so as to allow data communication therebetween. Upon receiving the main welding execution command transmitted from the host device 1, the robot control device 2B measures a positional deviation amount with the workpiece Wk. The robot control device 2B corrects a position of each of teaching points included in the inspection operation teaching program or corrects a position of each of teaching points included in the welding operation teaching program based on the measured positional deviation amount with the workpiece Wk. The robot control device 2B transmits the corrected welding operation teaching program to the robot control device 2A, and causes the robot control device 2A to execute the main welding.

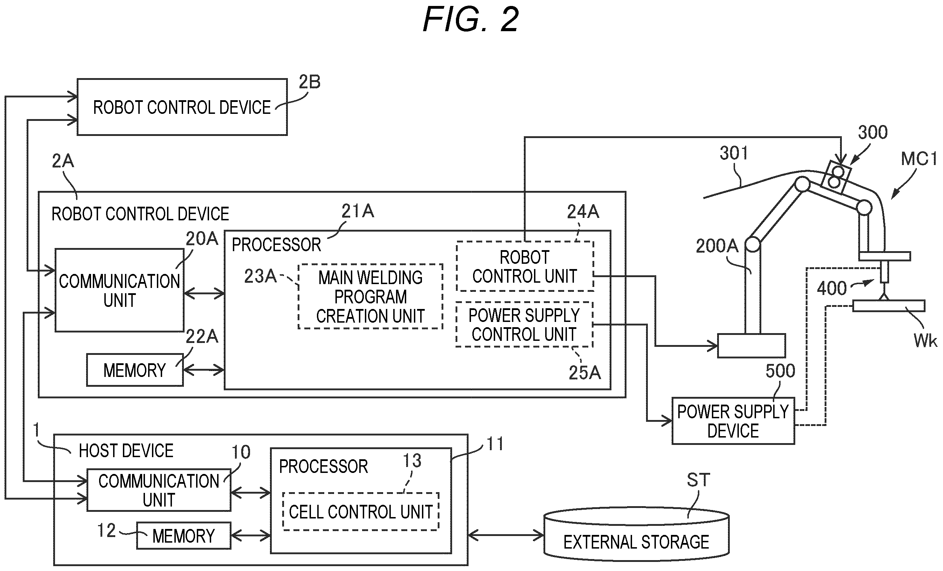

Upon receiving the bead appearance inspection execution command transmitted from the host device 1, the robot control device 2B creates an appearance inspection program based on an inspection operation teaching program corresponding to the execution command, and controls the inspection robot MC2 (see FIG. 2) to execute the appearance inspection of a weld bead.

The robot control device 2B controls the welding robot MC1 (see FIG. 2) to which the sensor 4 is attached based on an inspection operation teaching program corresponding to the execution command, and executes the appearance inspection of a weld bead generated on the workpiece Wk. Although the appearance inspection report indicating that the bead appearance inspection is completed is transmitted from the inspection control device 3 to the host device 1, the appearance inspection report may be transmitted to the host device 1 from the robot control device 2B itself or the robot control device 2B receiving an instruction from the inspection control device 3. Accordingly, the host device 1 can appropriately detect the completion of the bead appearance inspection.

The welding robot MC1 is connected to the robot control device 2A so as to allow data communication therebetween. The welding robot MC1 executes main welding commanded from the host device 1 under control of the corresponding robot control device 2A. In addition, the inspection robot MC2 moves the sensor 4 based on the inspection operation teaching program, thereby executing the bead appearance inspection (appearance scanning) commanded from the host device 1.

The inspection control device 3 is separately connected to the host device 1, the robot control device 2B, and the sensor 4 so as to allow data communication therebetween. Upon receiving the bead appearance inspection execution command transmitted from the host device 1, the inspection control device 3 executes, together with the sensor 4 included in the inspection robot MC2, the bead appearance inspection (for example, inspection on whether the weld bead formed on the workpiece satisfies a predetermined welding standard) on a welding portion (that is, a weld bead) of the workpiece Wk produced by the welding robot MC1 in accordance with the inspection operation teaching program for the corresponding workpiece Wk. As a result of the inspection operation, the inspection control device 3 uses input data (for example, point cloud data capable of specifying a three-dimensional shape of the weld bead) related to a shape of the weld bead acquired by the sensor 4 to execute the bead appearance inspection based on comparison between the input data related to the shape of the weld bead and master data of a non-defective workpiece predetermined for each workpiece.

The inspection control device 3 executes the bead appearance inspection, generates an appearance inspection report including an inspection determination result of the bead appearance inspection and a notification indicating that the bead appearance inspection is completed, transmits the appearance inspection report to the host device 1, and outputs the appearance inspection report to the monitor MN2. When the inspection control device 3 determines that a defect is detected in the bead appearance inspection of the workpiece, the inspection control device 3 generates an appearance inspection report including an appearance inspection result including information on a defective section for repair welding of the defect, and transmits the appearance inspection report to the host device 1 and the robot control device 2B. In addition, when the inspection control device 3 determines that a defect is detected by the bead appearance inspection of the workpiece, the inspection control device 3 creates, by using the appearance inspection result including the information on the defective section, a repair welding program for executing correction such as repair on a defective portion. The inspection control device 3 transmits, to the host device 1 or the robot control device 2B, the repair welding program and the appearance inspection result in association with each other.

The inspection control device 3 scans an appearance of the workpiece Wk based on an appearance scanning execution command for scanning the workpiece Wk transmitted via the host device 1 or the robot control device 2B. As a result of the appearance scanning, the inspection control device 3 transmits, to the robot control device 2B, input data (for example, point cloud data capable of specifying the three-dimensional shape of the workpiece Wk) related to the shape of the workpiece Wk acquired by the sensor 4.

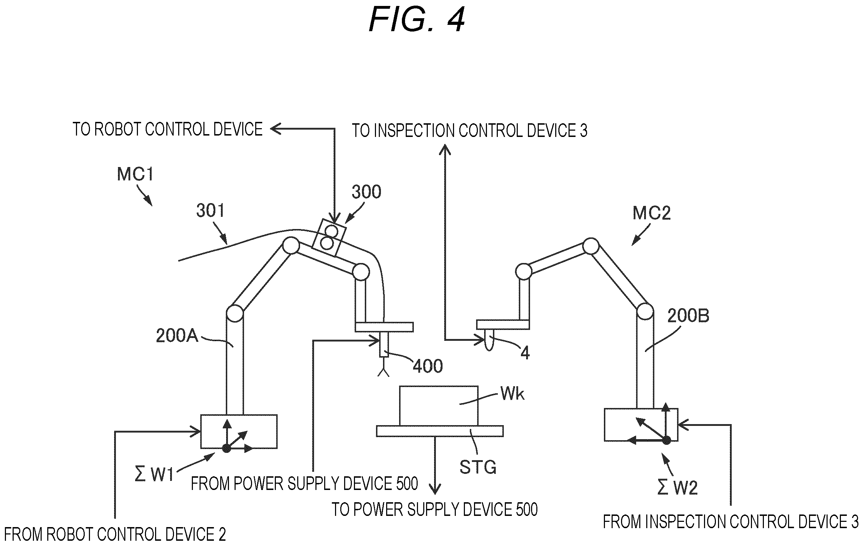

The sensor 4 is connected to the inspection control device 3 so as to allow data communication therebetween. The sensor 4 is attached to the inspection robot MC2, and executes three-dimensional scanning of the workpiece Wk placed on a stage STG (see FIG. 4) in accordance with driving of the manipulator 200B based on control of the robot control device 2B. The sensor 4 acquires three-dimensional shape data (for example, point cloud data, mesh data, and the like) capable of specifying a position and the like of the workpiece Wk placed on the stage STG in accordance with the driving of the manipulator 200B based on the control of the robot control device 2B, and transmits the three-dimensional shape data to the inspection control device 3.

The monitor MN2 may be formed using a display device such as an LED or an organic EL. The monitor MN2 displays, for example, a screen showing a notification indicating that the bead appearance inspection is completed or the notification and a result of the bead appearance inspection, which is output from the inspection control device 3. In addition, a speaker (not illustrated) may be connected to the inspection control device 3 instead of the monitor MN2 or together with the monitor MN2, and the inspection control device 3 may output, via the speaker, a sound indicating a content of the notification indicating that the bead appearance inspection is completed or the notification and the bead appearance inspection result.

Here, the position information of the welding line is information indicating a position of the welding line welded to the workpiece Wk in a main welding step.

In addition, the welding operation teaching program is a program that is created based on the position of the welding line and that causes the welding robot MC1 to execute the main welding. The welding operation teaching program is created including information on a position, a distance, and an angle (posture) of a teaching point for executing various operations (for example, approach, retraction, avoidance, and welding) for subjecting the main welding to the workpiece Wk using the welding torch 400, and information on welding conditions and the like.

Here, the inspection operation teaching program is a program that is created based on the welding line and that causes the welding robot MC1 to execute the bead appearance inspection on at least one weld bead created by the main welding. The inspection operation teaching program is created including information on a position, a distance, and an angle (posture) of a teaching point for executing various operations (for example, approach, retraction, avoidance, and scanning) for executing the bead appearance inspection on the created weld bead using the sensor 4.

The teach pendant TP1 is connected to the robot control device 2A such that data can be transmitted and received between the teach pendant TP1 and the robot control device 2A. The teach pendant TP1 transmits, to the robot control device 2A, the position information of the welding line defined by the user operation using the actual welding robot MC1 and the workpiece Wk. The robot control device 2A stores the position information of the welding line transmitted from the teach pendant TP1 in a memory 22A (see FIG. 2) and transmits the position information to the robot control device 2A.

The teach pendant TP2 is connected to the robot control device 2B such that data can be transmitted and received between the teach pendant TP2 and the robot control device 2B. The teach pendant TP2 transmits, to the robot control device 2B, position information of the sensor 4 defined by the user operation using the actual inspection robot MC2 and the workpiece Wk. The robot control device 2B stores the position information of the sensor 4 transmitted from the teach pendant TP2 in the memory 22 (see FIG. 2) and transmits the position information to the robot control device 2B.

FIG. 2 is a diagram illustrating an internal configuration example of the host device 1 and the robot control device 2B according to Embodiment 1. In order to make the description easy to understand, the robot control device 2B, the inspection control device 3, the inspection robot MC2, the sensor 4, the monitors MN1 and MN2, the input interface UI1, and the like are not illustrated in FIG. 2.

The welding robot MC1 executes the main welding step based on the welding operation teaching program using the welding torch 400 under the control of the robot control device 2A. The welding robot MC1 executes, for example, arc welding in the main welding step. The welding robot MC1 may execute welding (for example, laser welding and gas welding) other than the arc welding. In this case, although not illustrated, a laser head, instead of the welding torch 400, may be connected to a laser oscillator via an optical fiber. The welding robot MC1 is a configuration including at least the manipulator 200A, the wire feeding device 300, the welding wire 301, and the welding torch 400.

The manipulator 200A includes articulated arms, and moves each arm based on a control signal from a robot control unit 24A of the robot control device 2A. Accordingly, the manipulator 200A can change a positional relation of the welding torch 400 with respect to the workpiece Wk (for example, an angle of the welding torch 400 with respect to the welding robot MC1) by driving the arms.

The wire feeding device 300 controls the feeding speed of the welding wire 301 based on the control signal transmitted from the robot control device 2A. The wire feeding device 300 may include a sensor (not illustrated) that can detect a remaining amount of the welding wire 301. Based on an output of the sensor, the robot control device 2A can detect that the main welding step is completed.

The welding wire 301 is held by the welding torch 400. When electric power is supplied from a power supply device 500 to the welding torch 400, an arc is generated between a distal end of the welding wire 301 and the workpiece Wk, and the arc welding is executed. Illustration and description of a configuration and the like for supplying shielding gas to the welding torch 400 are omitted for the convenience of description.

The host device 1 generates execution commands for various steps of the main welding or the bead appearance inspection by using the welding-related information input or set in advance by the user, and transmits the execution commands to the robot control device 2A. The host device 1 includes at least a communication unit 10, a processor 11, and a memory 12.

The communication unit 10 is separately connected to the robot control device 2A, the robot control device 2B, the inspection control device 3, and the external storage ST so as to allow data communication therebetween. The communication unit 10 transmits, to the robot control devices 2A and 2B or the inspection control device 3, the execution commands for various steps of the main welding or the bead appearance inspection generated by the processor 11. The communication unit 10 receives the main welding completion report transmitted from the robot control device 2A and the appearance inspection report transmitted from the robot control device 2B or the inspection control device 3, and outputs the main welding completion report and the appearance inspection report to the processor 11. The main welding execution command may include, for example, a control signal for controlling each of the manipulator 200A, the wire feeding device 300, and the power supply device 500 that are included in the welding robot MC1.

The processor 11 is formed by using, for example, a central processing unit (CPU) or a field programmable gate array (FPGA), and executes various processes and controls in cooperation with the memory 12. Specifically, the processor 11 implements functions of a cell control unit 13 by referring to a program stored in the memory 12 and executing the program.

The memory 12 includes, for example, a random access memory (RAM) as a work memory used when a process of the processor 11 is executed, and a read only memory (ROM) that stores a program defining the process of the processor 11. Data generated or acquired by the processor 11 is temporarily stored in the RAM. The program defining the process of the processor 11 is written into the ROM. The memory 12 stores data of the welding-related information read from the external storage ST, the status of the workpiece, and the like.

The cell control unit 13 creates, based on the welding-related information stored in the external storage ST, an execution command for executing the main welding, the bead appearance inspection of the workpiece Wk, appearance scanning of the workpiece Wk, or the repair welding. In addition, the cell control unit 13 creates a main welding program at the time of main welding, an appearance inspection program related to driving of the welding robot MC1 at the time of bead appearance inspection on the workpiece Wk, or an appearance scanning program related to driving of the welding robot MC 1 at the time of appearance scanning based on the welding-related information stored in the external storage ST and the welding operation teaching program and the inspection operation teaching program that are transmitted from the robot control device 2B. Further, the cell control unit 13 creates an execution command for the created programs. The appearance inspection program and the appearance scanning program may be created for each workpiece Wk in advance and stored in the external storage ST. In this case, the cell control unit 13 reads out and acquires various programs from the external storage ST. The cell control unit 13 may generate different execution commands for various steps of the main welding to be executed by the welding robot MC1. The execution commands for the main welding appearance inspection and the appearance scanning that are generated by the cell control unit 13 are transmitted to the corresponding robot control devices 2A and 2B or the inspection control device 3 via the communication unit 10.

The robot control device 2A refers to a corresponding program based on the execution command for the main welding, the bead appearance inspection, or the appearance scanning transmitted from the host device 1. The robot control device 2A controls the welding robot MC1 (for example, the manipulator 200A, the wire feeding device 300, and the power supply device 500) based on the referred program. The robot control device 2A is a configuration including at least a communication unit 20A, a processor 21A, and the memory 22A.

The communication unit 20A is separately connected to the host device 1, the welding robot MC1, the robot control device 2B, and the teach pendant TP1 so as to allow data communication therebetween. Although illustration is simplified in FIG. 2, data is transmitted and received between the robot control unit 24A and the manipulator 200A, between the robot control unit 24A and the wire feeding device 300, and between a power supply control unit 25A and the power supply device 500 via the communication unit 20A. The communication unit 20A receives the execution command for the main welding or the bead appearance inspection transmitted from the host device 1. The communication unit 20A receives the position information of the welding line, the welding operation teaching program, and the inspection operation teaching program that are transmitted from the robot control device 2B. The communication unit 20A transmits the workpiece information of the workpiece produced by the main welding to the host device 1.

Here, the workpiece information not only includes an ID of the workpiece but also includes at least an ID, a name, and a welding portion of an original workpiece used in the main welding, and a welding condition at the time of executing the main welding.

The processor 21A is formed using, for example, a CPU or an FPGA, and executes various processes and controls in cooperation with the memory 22A. Specifically, the processor 21A implements functions of a main welding program creation unit 23A, the robot control unit 24A, and the power supply control unit 25A by referring to a program stored in the memory 22A and executing the program. In addition, the processor 21A executes, based on a main welding program generated by the main welding program creation unit 23A using the welding operation teaching program, calculation on a parameter for controlling the welding robot MC 1 (specifically, each of the manipulator 200A, the wire feeding device 300, and the power supply device 500) controlled by the robot control unit 24A.

The memory 22A includes, for example, a RAM as a work memory used when a process of the processor 21A is executed, and a ROM that stores a program defining the process of the processor 21A. Data generated or acquired by the processor 21A is temporarily stored in the RAM. The program defining the process of the processor 21A is written into the ROM. The memory 22A stores data of the execution command for the main welding, the bead appearance inspection, or the appearance scanning transmitted from the host device 1, the welding-related information in which the workpiece information of the workpiece Wk to be produced by the main welding and the position information of the welding line are associated with each other, the position information of the welding line transmitted from the teach pendant TP1, and the like. The welding-related information including the workpiece information of the workpiece Wk may include the welding operation teaching program, the position information of the welding line used to create each of the welding operation teaching program and the inspection operation teaching program, and the welding operation setting information.

Based on the main welding execution command transmitted from the host device 1 via the communication unit 20A, the main welding program creation unit 23A uses the workpiece information (for example, information on an ID, a name, and a component (an original workpiece, a component, or the like) of a workpiece, and position information of a welding line) of each of the plurality of original workpieces included in the execution command and the welding operation teaching program associated with the workpiece information to create a main welding program for the main welding to be executed by the welding robot MC 1. The main welding program may include various parameters such as a welding current, a welding voltage, an offset amount, a welding speed, and a posture angle of the welding torch 400 for controlling the power supply device 500, the manipulator 200A, the wire feeding device 300, the welding torch 400, and the like during the execution of the main welding. The main welding program may be stored in the processor 21A or may be stored in the RAM of the memory 22A.

The robot control unit 24A generates a control signal for driving the welding robot MC1 (specifically, each of the manipulator 200A, the wire feeding device 300, and the power supply device 500) based on the main welding program generated by the main welding program creation unit 23A. The robot control unit 24A transmits the generated control signal to the welding robot MC 1.

The power supply control unit 25A drives the power supply device 500 based on a calculation result of the main welding program generated by the main welding program creation unit 23A.

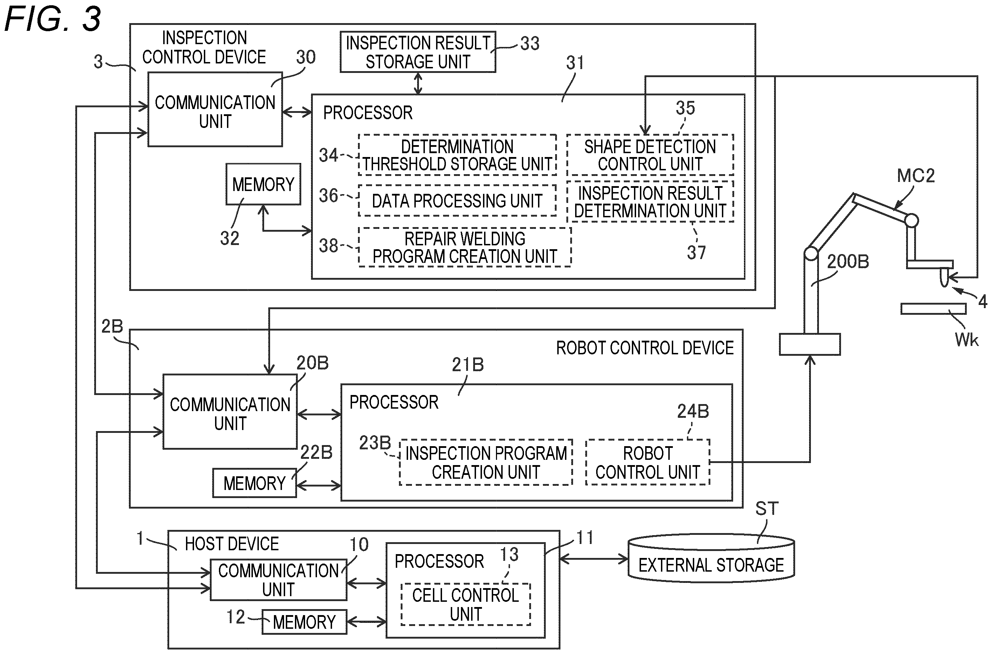

FIG. 3 is a diagram illustrating an internal configuration example of the host device 1, the robot control device 2B, and the inspection control device 3 according to Embodiment 1. In order to make the description easy to understand, the robot control device 2A, the welding robot MC1, the monitors MN1 and MN2, the input interface UI1, and the like are not illustrated in FIG. 3.

The inspection robot MC2 executes a bead appearance inspection step based on the inspection operation teaching program using the sensor 4 under the control of the robot control device 2B. The inspection robot MC2 executes three-dimensional scanning of the workpiece Wk using, for example, the sensor 4 in the appearance inspection step. The inspection robot MC2 may execute an appearance inspection (for example, imaging of the workpiece Wk using a camera) other than the three-dimensional scanning using the sensor 4. The inspection robot MC2 is a configuration including at least the manipulator 200B, the wire feeding device 300, the welding wire 301, and the sensor 4.

The manipulator 200B includes articulated arms, and moves each arm based on a control signal from a robot control unit 24B of the robot control device 2B. Accordingly, the manipulator 200B can change a positional relation between the workpiece Wk and the sensor 4 (for example, an angle of the sensor 4 with respect to the inspection robot MC2) by driving the arms.

The robot control device 2B refers to the corresponding program based on the bead appearance inspection execution command transmitted from the host device 1. The robot control device 2B controls the inspection robot MC2 (for example, the sensor 4 and the manipulator 200B) based on the referred program. The robot control device 2B includes at least a communication unit 20B, a processor 21B, and a memory 22B.

Although FIG. 1 illustrates a configuration in which three-dimensional shape data obtained by scanning by the sensor 4 is transmitted to the inspection control device 3, the three-dimensional shape data may be directly transmitted from the sensor 4 to the robot control device 2B as illustrated in FIG. 3. In such a case, the sensor 4 is connected to the communication unit 20B of the robot control device 2B such that data can be transmitted and received between the sensor 4 and the communication unit 20B, and transmits input data related to the shape of the workpiece Wk and input data related to a shape of the welding torch 400 or an alignment pattern AP of the welding robot MC1 to the robot control device 2B.

The communication unit 20B as an example of an acquisition unit and an output unit is separately connected to the host device 1, the robot control device 2A, the inspection control device 3, the inspection robot MC2, and the teach pendant TP2 so as to allow data communication therebetween. The communication unit 20B receives the bead appearance inspection execution command transmitted from the host device 1. The communication unit 20B receives the position information of the welding line transmitted from the teach pendant TP2 and the inspection operation teaching program, and receives a current position of the welding robot MC 1 (for example, a position of the welding torch 400) from the robot control device 2A. The communication unit 20B transmits the appearance inspection result to the host device 1.

The processor 21B as an example of a calculation unit, a conversion unit, and a correction unit is formed using, for example, a CPU or an FPGB, and executes various processes and controls in cooperation with the memory 22B. Specifically, the processor 21B implements functions of an inspection program creation unit 23B and the robot control unit 24B by referring to a program stored in the memory 22B and executing the program. The processor 21B calculates a parameter for controlling the inspection robot MC2 controlled by the robot control unit 24B, based on an appearance inspection program generated by the inspection program creation unit 23B using the inspection operation teaching program.

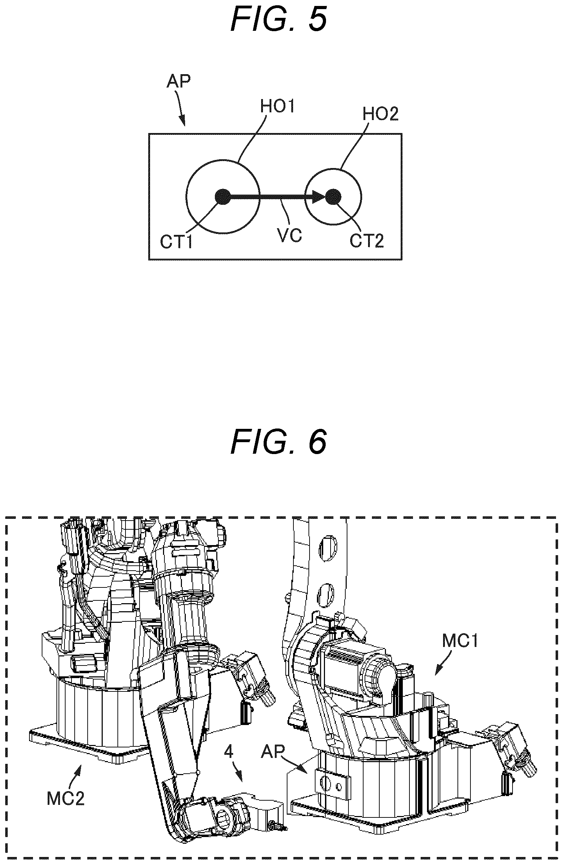

The processor 21B calculates a positional deviation amount (distance and angle) of the workpiece Wk and a positional deviation amount (distance and angle) of the welding robot MC1 based on the shape of the workpiece Wk acquired by the sensor 4 and the shape of the welding torch 400 or the alignment pattern AP (see FIG. 5) of the welding robot MC1. The processor 21B corrects a position of each of a plurality of teaching points included in the inspection operation teaching program based on the calculated positional deviation amount of the workpiece Wk.

The processor 21B corrects a position of each of teaching points included in the welding operation teaching program based on the calculated positional deviation amount of the workpiece Wk and the positional deviation amount of the welding robot MC1. The processor 21B transmits the corrected welding operation teaching program to the robot control device 2A.

The memory 22B includes, for example, a RAM as a work memory used when a process of the processor 21B is executed, and a ROM that stores a program defining the process of the processor 21B. Data generated or acquired by the processor 21B is temporarily stored in the RAM. The program defining the process of the processor 21B is written into the ROM. The memory 22B stores data of the bead appearance inspection execution command transmitted from the host device 1, the inspection operation teaching program transmitted from the teach pendant TP2, and the like.

The inspection program creation unit 23B requests the robot control device 2A for a current position of the welding robot MC1 (specifically, a scanning position for specifying a position of the welding robot MC1) based on the appearance inspection execution command transmitted from the host device 1 via the communication unit 20B. The inspection program creation unit 23B acquires the current position of the welding robot MC1 transmitted from the robot control device 2A. The inspection program creation unit 23B uses the acquired position information of the welding robot MC1, workpiece information (for example, information on an ID, a name, a component (an original workpiece, a component, or the like) of a workpiece, and position information of a welding line) of each of the plurality of original workpieces included in the execution command, and the inspection operation teaching program associated with the workpiece information to create an appearance inspection program for the bead appearance inspection to be executed by the inspection robot MC2.

The robot control unit 24B generates a control signal for driving the inspection robot MC2 (specifically, the sensor 4 and the manipulator 200B) based on the appearance inspection program generated by the inspection program creation unit 23B. The robot control unit 24B transmits the generated control signal to the inspection robot MC2.

The robot control unit 24B drives each of the manipulator 200B and the sensor 4 of the inspection robot MC2 based on the inspection operation teaching program (that is, the appearance inspection program) transmitted from the teach pendant TP2. Accordingly, the sensor 4 attached to the inspection robot MC2 can scan the welding torch 400 of the welding robot MC1 or the alignment pattern AP (see FIG. 5) attached to the welding robot MC1 to acquire the shape of the welding torch 400 or the alignment pattern AP.

The inspection control device 3 controls a bead appearance inspection process and an appearance scanning process of the workpiece Wk produced by the main welding by the welding robot MC 1 or the workpiece Wk repaired by one or more times of repair welding, based on the bead appearance inspection execution command transmitted from the host device 1 or the robot control device 2B. The bead appearance inspection is, for example, an inspection of whether a weld bead formed in the workpiece Wk satisfies a predetermined welding standard (for example, a welding quality standard required by each of the users), and is formed by the inspection determination described above. The inspection control device 3 determines (inspects) whether an appearance shape of the weld bead formed in the workpiece Wk satisfies the predetermined welding standard based on the input data (for example, point cloud data capable of specifying a three-dimensional shape of the weld bead) related to the shape of the weld bead acquired by the sensor 4. The inspection control device 3 transmits the input data related to the shape of the weld bead acquired by the sensor 4 or the input data related to the shape of the workpiece Wk to the robot control device 2B. The inspection control device 3 includes at least a communication unit 30, a processor 31, a memory 32, and an inspection result storage unit 33.

The communication unit 30 is separately connected to the host device 1, the robot control device 2B, and the sensor 4 so as to allow data communication therebetween. Although illustration is simplified in FIG. 2, data is transmitted and received between a shape detection control unit 35 and the sensor 4 via the communication unit 30. The communication unit 30 receives the bead appearance inspection execution command transmitted from the host device 1. The communication unit 30 transmits an inspection determination result of the bead appearance inspection using the sensor 4 to the host device 1, and transmits the three-dimensional shape data of the weld bead acquired by the sensor 4 to the robot control device 2B.

The processor 31 is formed using, for example, a CPU or an FPGA, and executes various processes and controls in cooperation with the memory 32. Specifically, the processor 31 implements functions of a determination threshold storage unit 34, the shape detection control unit 35, a data processing unit 36, an inspection result determination unit 37, a repair welding program creation unit 38, and the like by referring to a program stored in the memory 32 and executing the program.

The memory 32 includes, for example, a RAM serving as a work memory used when a process of the processor 31 is executed, and a ROM that stores a program defining the process of the processor 31. Data generated or acquired by the processor 31 is temporarily stored in the RAM. The program defining the process of the processor 31 is written into the ROM.

The inspection result storage unit 33 is formed using, for example, a hard disk or a solid state drive. The inspection result storage unit 33 stores data indicating a result of the bead appearance inspection on the welding portion of the workpiece Wk (for example, a workpiece or a repair workpiece) as an example of the data generated or acquired by the processor 31. Data indicating a result of the bead appearance inspection is generated by, for example, the inspection result determination unit 37.

The determination threshold storage unit 34 is formed by, for example, a cache memory provided in the processor 31, is set in advance by a user operation, and stores information on thresholds (for example, a threshold set for each type of welding failure) corresponding to the welding portion and the bead appearance inspection process executed by the inspection result determination unit 37. The thresholds are, for example, an allowable range of a positional deviation of the weld bead, thresholds of a length, a height, and a width of the weld bead, and thresholds of a perforation, a pit, an undercut, and a sputtering. The determination threshold storage unit 34 may store, as the thresholds during the bead appearance inspection after repair welding, an allowable range that satisfies a minimum welding standard (quality) required by a customer or the like (for example, a minimum allowable value or a maximum allowable value). These thresholds are used in a process of determining whether an inspection result created by the inspection result determination unit 37 passes the bead appearance inspection. Further, the determination threshold storage unit 34 may store an upper limit value of the number of times of bead appearance inspections for each welding portion. Accordingly, when the number of times at the time of correcting a defective portion by the repair welding exceeds a predetermined upper limit value of the number of times, the inspection control device 3 determines that the correction on the defective portion by automatic repair welding by the welding robot MC1 is difficult or impossible, and can prevent a decrease in an operation rate of the welding system 100.

The shape detection control unit 35 acquires the input data (for example, point cloud data capable of specifying the three-dimensional shape of the weld bead) related to the shape of the weld bead acquired and transmitted by the sensor 4 based on the bead appearance inspection execution command for the welding portion of the workpiece Wk (for example, the workpiece) transmitted from the host device 1. In addition, the shape detection control unit 35 acquires the input data (for example, point cloud data capable of specifying the three-dimensional shape of the workpiece Wk) related to the shape of the workpiece Wk acquired and transmitted by the sensor 4 based on the appearance scanning execution command for the workpiece Wk (for example, the workpiece) transmitted from the host device 1. Specifically, when the sensor 4 reaches a position where the weld bead or the workpiece Wk can be imaged (in other words, a position where the three-dimensional shape of the welding portion or the workpiece Wk can be detected) in accordance with the driving of the manipulator 200A by the robot control device 2A described above, the shape detection control unit 35 causes the sensor 4 to emit, for example, a laser beam to acquire the input data related to the shape of the weld bead or the workpiece Wk. Upon receiving the input data (see above) acquired by the sensor 4, the shape detection control unit 35 transmits the input data to the data processing unit 36.

When the input data (see above) related to the shape of the weld bead is acquired from the shape detection control unit 35, the data processing unit 36 converts the input data into a data format suitable for various inspection determinations executed by the inspection result determination unit 37. The conversion of the data format may include, as a so-called preprocess, a correction process of removing unnecessary point cloud data (for example, noise) included in the input data (that is, point cloud data), and the preprocess may be omitted. For example, the data processing unit 36 executes a statistical process on the input shape data to generate image data indicating the three-dimensional shape of the weld bead. The data processing unit 36 may execute edge enhancement correction in which a peripheral portion of the weld bead is enhanced in order to enhance the position and the shape of the weld bead as data for the inspection determination. The data processing unit 36 may count the number of times the bead appearance inspection is executed for each welding failure portion, and determine that it is difficult or impossible to correct the welding failure portion by automatic repair welding in a case where a welding inspection result is not favorable even when the number of times of the bead appearance inspection exceeds the number of times stored in advance in the memory 32. In this case, the inspection result determination unit 37 generates an alert screen including a position of the welding failure portion and a type of the welding failure (for example, a perforation, a pit, an undercut, a sputtering, or a protrusion), and transmits the generated alert screen to the host device 1 via the communication unit 30. The alert screen transmitted to the host device 1 is displayed on the monitor MN1. The alert screen may be displayed on the monitor MN2.

The data processing unit 36 uses the threshold for bead appearance inspection stored in the determination threshold storage unit 34 to execute the bead appearance inspection based on comparison between the input data related to the shape of the weld bead acquired by the sensor 4 and the master data of a non-defective workpiece predetermined for each workpiece. The data processing unit 36 creates an appearance inspection report including a defect determination result as an inspection determination result (that is, information indicating presence or absence of a defect that requires repair welding) and information on a defective section for each defective portion and stores the appearance inspection report in the inspection result storage unit 33, and transmits the appearance inspection report to the host device 1 or the robot control device 2B via the communication unit 30. When the data processing unit 36 determines that there is no defective portion that requires repair welding in the workpiece Wk to be inspected, the data processing unit 36 creates an appearance inspection report including an inspection determination result indicating that the inspection result passes the bead appearance inspection and stores the appearance inspection report in the inspection result storage unit 33, and transmits the appearance inspection report to the host device 1 via the communication unit 30.

When the input data (see above) related to the shape of the workpiece Wk is acquired from the shape detection control unit 35, the data processing unit 36 converts the input data into a data format suitable for a calculation process executed by the inspection result determination unit 37. The conversion of the data format may include, as a so-called preprocess, a correction process of removing unnecessary point cloud data (for example, noise) included in the input data (that is, point cloud data), or may be a process of generating a 3D model of the workpiece Wk. In addition, the data processing unit 36 may execute edge enhancement correction in which the position and the shape of the workpiece Wk are enhanced and the peripheral portion of the workpiece Wk is enhanced. The data processing unit 36 transmits the input data related to the shape of the converted workpiece Wk to the robot control device 2B via the communication unit 30.

The inspection result determination unit 37 executes the bead appearance inspection based on comparison between the input data related to the shape of the weld bead acquired by the sensor 4 and the master data of the non-defective workpiece predetermined for each workpiece, and inspects the shape reliability of the weld bead (for example, whether the weld bead is along a straight or curved welding line), the bead crack, and a bead positional deviation. The inspection result determination unit 37 executes comparison (so-called image process) between the master data of the non-defective workpiece and the data (for example, image data generated based on the point cloud data) subjected to the data conversion by the data processing unit 36 for the inspection determination. Therefore, the inspection result determination unit 37 can inspect the shape reliability of the weld bead, the bead crack, and the bead positional deviation with high accuracy. The inspection result determination unit 37 calculates an inspection score indicating an inspection result of the shape reliability of the weld bead, the bead crack, and the bead positional deviation, and creates a calculated value of the inspection score as an inspection result. Further, the inspection result determination unit 37 compares the created inspection result with a threshold for the inspection result stored in the memory 32. The inspection result determination unit 37 outputs, to the host device 1 and the monitor MN2, an appearance inspection result including information on the compared result (that is, whether the acquired first inspection result passes or fails the bead appearance inspection).

The inspection result determination unit 37 executes the bead appearance inspection of forming a neural network by a plurality of types of artificial intelligence and determining presence or absence of a welding failure based on AI for the input data related to the shape of the weld bead acquired by the sensor 4 or the input data after preprocessing the input data by the data processing unit 36, and inspect presence or absence of the perforation, the pit, the undercut, the sputtering, and the projection of the weld bead. The perforation, the pit, the undercut, the sputtering, and the protrusion of the weld bead are merely exemplified, and the defect type inspected by the inspection result determination unit 37 is not limited thereto. When it is determined that the welding failure of the corresponding type is detected, the inspection result determination unit 37 specifies the position of the weld bead in which the welding failure is detected. The inspection result determination unit 37 determines presence or absence of a welding failure using a learning model (AI) obtained in advance by a learning process for each type of welding failure or each group of types of welding failure. Accordingly, the inspection result determination unit 37 can inspect, for example, the presence or absence of the perforation, pit, undercut, sputtering, and protrusion of the weld bead with high accuracy. The inspection result determination unit 37 calculates an inspection result (in other words, an inspection score indicating an occurrence probability) of the perforation, the pit, the undercut, the sputtering, and the projection of the weld bead, creates an appearance inspection result including a calculated value of the inspection score, and outputs the appearance inspection result to the host device 1 and the monitor MN2.

The inspection result determination unit 37 may determine whether the repair welding by the welding robot MC1 is possible (in other words, whether the repair welding by the welding robot MC1 is favorable or manual repair welding is favorable) based on the inspection result (inspection score) included in the appearance inspection report described above, and output the determination result included in the appearance inspection report described above.

The repair welding program creation unit 38 creates a repair welding program for the workpiece Wk to be executed by the welding robot MC1 by using the appearance inspection report of the workpiece Wk by the data processing unit 36. The repair welding program may include various parameters such as a welding current, a welding voltage, an offset amount, a welding speed, and a posture angle of the welding torch 400 for controlling the power supply device 500, the manipulator 200A, the wire feeding device 300, the welding torch 400, and the like during the execution of the repair welding. The generated repair welding program may be stored in the processor 31, may be stored in the RAM of the memory 32, or may be transmitted to the host device 1 or the robot control device 2A via the communication unit 30 in association with the appearance inspection report.

The repair welding program creation unit 38 creates a repair welding program of the workpiece Wk (for example, a workpiece or a repair workpiece) to be executed by the welding robot MC1 using the appearance inspection report of the workpiece Wk (for example, a workpiece or a repair workpiece) by the inspection result determination unit 37 and the workpiece information (for example, information such as coordinates indicating a position of a detection point of a welding failure of the workpiece or the repair workpiece). The repair welding program may include various parameters such as a welding current, a welding voltage, an offset amount, a welding speed, and a posture angle of the welding torch 400 for controlling the power supply device 500, the manipulator 200, the wire feeding device 300, the welding torch 400, and the like during the execution of the repair welding. The generated repair welding program may be stored in the processor 31 or in the RAM in the memory 32.

The sensor 4 is, for example, a three-dimensional shape sensor, is attached to a distal end of the inspection robot MC2, and acquires a plurality of pieces of point cloud data capable of specifying the shape of the welding torch 400 or the alignment pattern AP of the welding robot MC1, the workpiece Wk, or a welding portion on the workpiece Wk. The sensor 4 generates point cloud data capable of specifying the three-dimensional shape of the welding portion based on the acquired point cloud data, and transmits the point cloud data to the robot control device 2B or the inspection control device 3.

When the sensor 4 is not attached to the distal end of the inspection robot MC2 and is disposed separately from the inspection robot MC2, the sensor 4 may include a laser light source (not illustrated) configured to scan the vicinity of the position of the welding torch 400, the alignment pattern AP, the workpiece Wk, or the welding portion of the welding robot MC1 transmitted from the robot control device 2B or the inspection control device 3, and a camera (not illustrated) that is disposed in a manner of capable of capturing an image of an imaging region including the vicinity of the position of the welding torch 400, the alignment pattern AP, the workpiece Wk, or the welding portion of the welding robot MC1 and configured to capture a reflection trajectory (that is, a shape line of the welding portion) of the reflected laser light of the emitted laser light. In this case, the sensor 4 transmits shape data (in other words, the image data) of the welding torch 400 or the alignment pattern AP of the welding robot MC1, the workpiece Wk, or the welding portion (that is, the weld bead) based on the laser beam captured by the camera to the robot control device 2B or the inspection control device 3.

The camera described above includes at least a lens (not illustrated) and an image sensor (not illustrated). The image sensor is, for example, a solid-state imaging device such as a charge coupled device (CCD) or a complementary metal oxide semi-conductor (CMOS), and converts an optical image formed on an imaging surface into an electrical signal.

A coordinate system (a welding coordinate system ΣW1) of the welding robot MC1 and an inspection coordinate system ΣW2 of the inspection robot MC2 will be described with reference to FIG. 4. FIG. 4 is a diagram illustrating the welding coordinate system ΣW1 and the inspection coordinate system ΣW2.

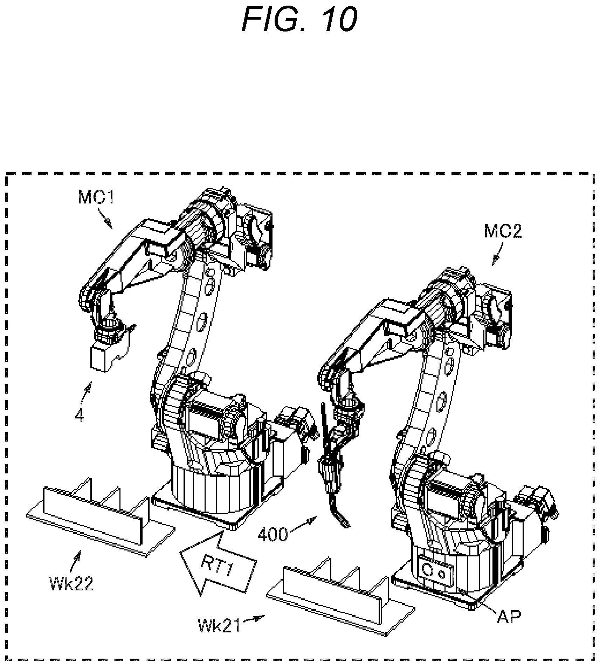

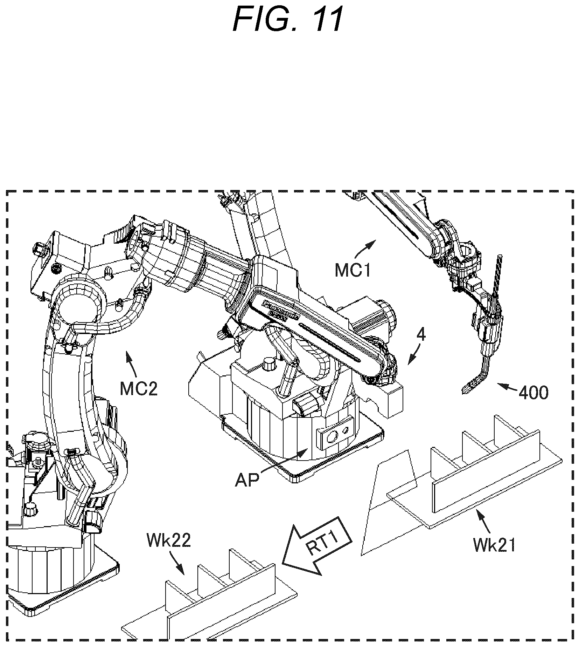

In the example illustrated in FIG. 4, the welding robot MC1 and the inspection robot MC2 are disposed to face each other with the workpiece Wk interposed therebetween, the main welding step executed by the welding robot MC1 and the bead appearance inspection step executed by the inspection robot MC2 are executed at the same place, but the arrangement of the welding robot MC1 and the inspection robot MC2 is not limited thereto. For example, as illustrated in FIGS. 10 and 11, the welding robot MC1 and the inspection robot MC2 may be disposed side by side along a conveyance direction RT1 of the workpiece Wk, or may be disposed in other ways.

The welding coordinate system ΣW1 is set for the welding robot MC1. A position of a teaching point included in the welding operation teaching program is defined based on the welding coordinate system ΣW1. Information on the welding coordinate system ΣW1 is stored in the memory of each of the robot control devices 2A and 2B.

The inspection coordinate system ΣW2 is set for the inspection robot MC2. A position of a teaching point included in the inspection operation teaching program is defined based on the inspection coordinate system ΣW2. Information on the inspection coordinate system ΣW2 is stored in the memory of each of the robot control devices 2A and 2B.

A position calculation example of the welding robot MC1 using the alignment pattern AP will be described with reference to FIGS. 5 and 6. FIG. 5 is a diagram illustrating an example of the alignment pattern AP. FIG. 6 is a diagram illustrating an example in which the alignment pattern AP is read. A shape of the alignment pattern AP illustrated in FIG. 5 is an example, but the present disclosure is not limited thereto. Although the alignment pattern AP illustrated in FIG. 6 is attached to a front surface of the welding robot MC1 as an example, the present disclosure is not limited thereto, and the alignment pattern AP may be attached to a position where the alignment pattern AP can be scanned (read) by the sensor 4 of the inspection robot MC2.

The alignment pattern AP is a plate for measuring a position of the welding robot MC 1 with respect to the inspection robot MC2 (that is, a distance and a direction), and is attached to a predetermined position on the welding robot MC1. In the alignment pattern AP, two holes HO1 and HO2 having different sizes are formed. An original position of the welding coordinate system ΣW1 and an attachment position of the alignment pattern AP may be different.

The robot control device 2B detects the two holes HO1 and HO2 from three-dimensional shape data of the alignment pattern AP read by the sensor 4. The robot control device 2B calculates the respective center positions CT1 and CT2 of the two detected holes HO1 and HO2, connects the two center positions CT1 and CT2, and generates a vector VC having the center position of one hole (the hole HO1 in the example illustrated in FIG. 5) as a start point and the center position of the other hole (the hole HO2 in the example illustrated in FIG. 5) as an end point. The robot control device 2B calculates an attachment angle of the alignment pattern AP based on a direction of the generated vector VC, and calculates a distance between the inspection robot MC2 and the welding robot MC1 based on a length of the vector VC. Accordingly, the robot control device 2B can calculate a relative position of the welding robot MC1 with respect to the inspection robot MC2.

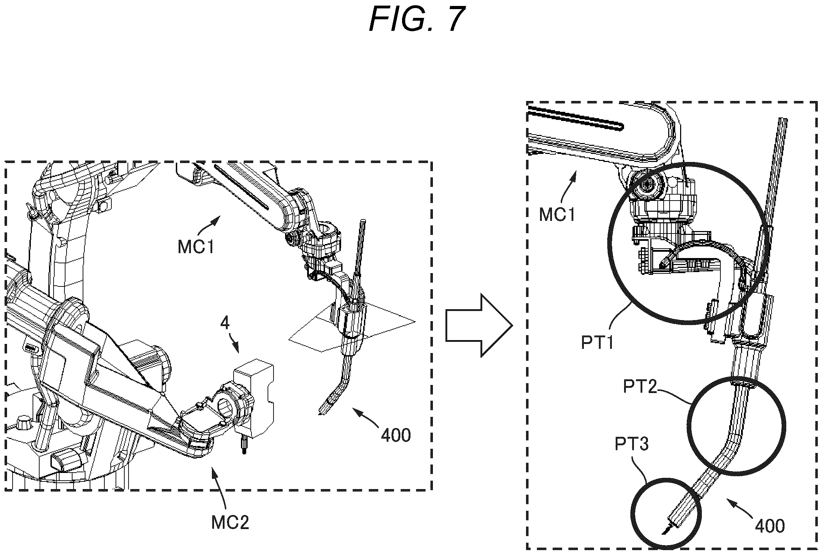

A position calculation example of the welding robot MC 1 using the welding torch 400 will be described with reference to FIG. 7. FIG. 7 is a diagram illustrating a scanning example of the welding torch 400. In the example illustrated in FIG. 7, it is needless to say that the posture angle of the welding torch 400 at the time of scanning is not limited thereto.

The robot control device 2B drives the inspection robot MC2 to scan the welding torch 400 at a predetermined position with the sensor 4. The robot control device 2B may acquire the current position information of the welding torch 400 transmitted from the robot control device 2A, drive the inspection robot MC2, and move the sensor 4 to a position where the welding torch 400 can be scanned. The sensor 4 transmits three-dimensional shape data (input data) of the welding torch 400 to the robot control device 2B.

The robot control device 2B reads a shape of the welding torch 400 from the three-dimensional shape data of the welding torch 400 transmitted from the sensor 4. The robot control device 2B calculates the relative position (a distance, a posture angle) of the welding torch 400 as the relative position of the welding robot MC1 with respect to the inspection robot MC2 based on the shape of the welding torch 400.

For example, the robot control device 2B analyzes the shape of the welding torch 400, detects an attachment portion of the welding torch 400 to the welding robot MC1 from a reading range PT1, and calculates a relative position (a distance and an angle) of the welding torch 400 with respect to the inspection robot MC2 based on a shape of the attachment portion.

For example, the robot control device 2B analyzes the shape of the welding torch 400, detects a curved portion of the welding torch 400 from a reading range PT2, calculates an angle of the welding torch 400 based on a shape of the curved portion, detects a distal end of the welding torch 400 from a reading range PT3, and calculates a position of the distal end. The robot control device 2B calculates the relative position (a distance and an angle) of the welding torch 400 with respect to the inspection robot MC2 based on the calculated angle (a direction) of the welding torch 400 based on the curved portion of the welding torch 400 and the position of the welding torch 400 based on the distal end of the welding torch 400.

A method of calculating the relative position (a distance, a posture angle) of the welding torch 400 is not limited to the example described above. The robot control device 2B may calculate the relative position (a distance and an angle) of the welding torch 400 with respect to the inspection robot MC2 by combining optional two positions of the attachment portion, the curved portion, and the distal end of the welding torch 400.

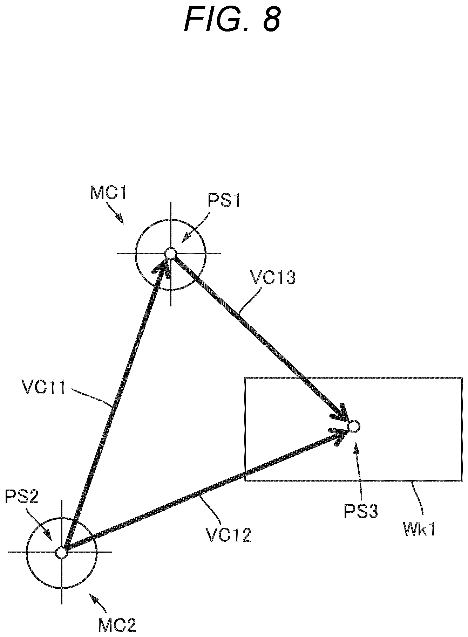

A calculation example of a positional deviation amount of the workpiece Wk in the welding coordinate system ΣW1 will be described with reference to FIG. 8. FIG. 8 is a diagram illustrating a calculation example of the positional deviation amount of the workpiece Wk.

The robot control device 2B calculates a position of the workpiece Wk with respect to the welding robot MC1 based on a position PS1 (a distance, a posture angle) of the welding robot MC1 with respect to a position PS2 of the inspection robot MC2 in the inspection coordinate system ΣW2 and a position PS3 (a distance, a posture angle) of the workpiece Wk with respect to the position PS2 of the inspection robot MC2 in the inspection coordinate system ΣW2. The position of the workpiece Wk is set in advance, and may be an edge of an original workpiece constituting the workpiece Wk, any point on the workpiece Wk, or the like.

The robot control device 2B calculates the positional deviation amount of the workpiece Wk based on the calculated position of the workpiece Wk and the position information of the workpiece Wk included in the workpiece information of the workpiece Wk. Hereinafter, a calculation example of the positional deviation amount of the workpiece Wk will be specifically described.

Based on the position PS1 of the welding robot MC1, the position PS2 of the inspection robot MC2, and the position PS1 of the workpiece Wk, the robot control device 2B calculates a positional deviation amount of the welding robot MC1 with reference to the position PS2 of the inspection robot MC2 and a positional deviation amount of the workpiece Wk with reference to the position PS2 of the inspection robot MC2.

The robot control device 2B corrects a position of a teaching point included in an inspection operation teaching program corresponding to the workpiece Wk based on the positional deviation amount of the workpiece Wk.

The robot control device 2B calculates vectors VC11 and VC12 based on the position PS1 of the welding robot MC1, the position PS2 of the inspection robot MC2, and the position PS1 of the workpiece Wk.

Here, the vector VC11 is a vector having the position PS2 of the inspection robot MC2 in the inspection coordinate system ΣW2 as a start point and the position PS1 of the welding robot MC1 with respect to the inspection robot MC2 as an end point. The vector VC12 is a vector having the position PS2 of the inspection robot MC2 in the inspection coordinate system ΣW2 as a start point and the position PS3 of the workpiece Wk with respect to the inspection robot MC2 as an end point.

The robot control device 2B calculates a vector VC13 based on a sum of an inverse vector of the vector VC11 and the vector VC12. The vector VC13 is a vector having the position PS1 of the welding robot MC1 in the welding coordinate system ΣW1 as a start point and the position PS3 of the workpiece Wk as an end point. Accordingly, the robot control device 2B can calculate the position PS3 (that is, distance, posture angle) of the workpiece Wk with respect to the position PS1 (origin) of the welding robot MC1 in the welding coordinate system ΣW1 from the vector VC13.

The robot control device 2B calculates a positional deviation amount of the workpiece Wk with respect to the welding robot MC1 based on the calculated vector VC13, and executes position correction of a teaching point included in a welding operation teaching program corresponding to the workpiece Wk based on the calculated positional deviation amount of the workpiece Wk. The robot control device 2B transmits the corrected welding operation teaching program to the robot control device 2B.

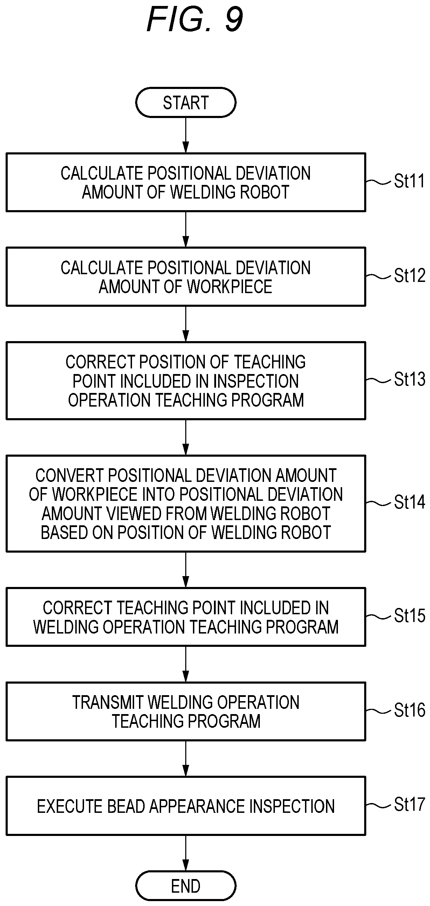

Next, an operation procedure of the robot control device 2B in Embodiment 1 will be described with reference to FIG. 9. FIG. 9 is a flowchart illustrating a correction procedure example of a teaching program executed by the robot control device 2B according to Embodiment 1. Processing procedures in step St11 and step St12 may be reversed.

The robot control device 2B calculates a position of the welding robot MC1 with reference to the inspection coordinate system ΣW2 of the inspection robot MC2 based on three-dimensional shape data of the welding robot MC1 transmitted from the sensor 4. The robot control device 2B calculates a positional deviation amount (a distance and a posture angle) between the calculated position of the welding robot MC1 and the position of the welding robot MC1 transmitted from the robot control device 2A or a position of the welding robot MC1 stored in advance (St11). The positional deviation amount calculated by the robot control device 2B is a three-dimensional positional deviation amount, and includes a three-dimensional distance with reference to a corresponding coordinate system and a posture angle (a rotation angle).

When the positional deviation amount of the welding robot MC1 is calculated based on the three-dimensional shape data of the welding torch 400 of the welding robot MC1, the robot control device 2B may calculate a position of the welding torch 400 (specifically, an attachment position of the welding torch 400 illustrated in FIG. 7, a position of the curved portion of the welding torch 400, a position of a torch distal end of the welding torch 400, and the like) as the position of the welding robot MC1. The robot control device 2B may calculate the position of the welding robot MC1 by further calculating an original position of the welding robot MC1 (for example, an original position of the welding robot MC1 in the welding coordinate system ΣW1) based on the calculated position of the welding torch 400.

When the shape of the alignment pattern AP attached to the welding robot MC1 acquired by the sensor 4 is acquired, the processor 21B calculates the position of the welding robot MC1 with reference to the inspection coordinate system ΣW2 of the inspection robot MC2 based on the shape of the alignment pattern AP.

The robot control device 2B calculates the position of the workpiece Wk with reference to the inspection coordinate system ΣW2 of the inspection robot MC2 based on the three-dimensional shape data of the workpiece Wk transmitted from the sensor 4. The robot control device 2B calculates a positional deviation amount (a distance and a posture angle) between the calculated position of the workpiece Wk and the position of the workpiece Wk included in the workpiece information of the workpiece Wk (St12).

The robot control device 2B corrects the position of each of the plurality of teaching points included in the inspection operation teaching program for executing the bead appearance inspection on the workpiece Wk, based on the calculated positional deviation amount of the workpiece Wk (St13).

Based on the position of the welding robot MC1, the robot control device 2B converts a positional deviation amount of the workpiece Wk in the inspection coordinate system ΣW2 into the positional deviation amount of the workpiece Wk in the welding coordinate system ΣW1 (that is, viewed from the welding robot MC1) (St14).

The robot control device 2B corrects a position of a teaching point included in the welding operation teaching program based on the calculated positional deviation amount of the workpiece Wk (St15).

The robot control device 2B transmits the corrected welding operation teaching program to the robot control device 2A (St16). The robot control device 2B executes the bead appearance inspection on the workpiece Wk for which the main welding step by the welding robot MC1 has been completed using the corrected inspection operation teaching program (St17).

The robot control device 2B may be omitted after the process of step St11 is executed at any timing (periodically or irregularly). For example, the robot control device 2B may execute the process of step St11 every time a predetermined number of workpieces Wk are produced, may execute the process of step St11 at a timing when the welding robot MC 1 and the inspection robot MC2 are powered on, or may execute the process of step St11 every several days or several weeks.

As described above, the robot control device 2B according to Embodiment 1 can calculate the positional deviation amount of the workpiece Wk even when a robot (the welding robot MC1) that executes the main welding step on the workpiece Wk and a robot (the inspection robot MC2) that executes the bead appearance inspection on the produced workpiece Wk are different from each other. In addition, the robot control device 2B can execute the position correction of a teaching point included in the welding operation teaching program and the position correction of a teaching point included in the inspection operation teaching program by calculating a relative position of the workpiece Wk with respect to the welding robot MC1 and a relative position of the workpiece Wk with respect to the inspection robot MC2 based on the calculated positional deviation amount of the workpiece Wk.

Accordingly, the robot control device 2B can more efficiently correct teaching points included in teaching programs used in a plurality of different robots (that is, the welding robot MC1 and the inspection robot MC2).

### (Modification of Embodiment 1)

An example has been described in which the welding system 100 according to Embodiment 1 described above corrects the teaching program used in each of two robots (the welding robot MC1 and the inspection robot MC2) by one robot control device 2B. An example will be described in which the welding system 100 according to a modification of Embodiment 1 calculates positional deviation amounts of two robots (the welding robot MC1 and the inspection robot MC2) by one robot control device 2B, and executes correction on a teaching program by the robot control devices 2A and 2B that control the respective robots.

First, the welding system 100 according to the modification of Embodiment 1 will be described. A configuration of the welding system 100 according to the modification of Embodiment 1 is the same as that of the welding system 100 according to Embodiment 1. Hereinafter, functions of the welding system 100 according to the modification of Embodiment 1 different from those of the welding system 100 of Embodiment 1 will be described.

FIG. 10 is a diagram illustrating a use case example of the welding system 100 according to the modification of Embodiment 1. FIG. 11 is a diagram illustrating a measurement example of a position of a workpiece Wk21. The arrangement of the welding robot MC1 and the inspection robot MC2 illustrated in FIGS. 10 and 11 is an example, but the present disclosure is not limited thereto. FIGS. 10 and 11 illustrate an example in which the main welding step executed by the welding robot MC1 and the bead appearance inspection step executed by the inspection robot MC2 are executed at different locations.

In the modification of Embodiment 1, the workpiece Wk21 is subjected to main welding by the welding robot MC1, and is conveyed in the conveyance direction RT1 after the main welding. A workpiece Wk22 is a workpiece after the main welding, and is subjected to bead appearance inspection by the inspection robot MC2.

The processor 21B of the robot control device 2B according to the modification of Embodiment 1 calculates a positional deviation amount of the workpiece Wk22 in the inspection coordinate system ΣW2. The processor 21B corrects a position of each of teaching points included in the inspection operation teaching program used for the bead appearance inspection on the workpiece Wk22 based on the calculated positional deviation amount of the workpiece Wk22.

The inspection program creation unit 23B creates an inspection program for executing the bead appearance inspection on the workpiece Wk22 based on the corrected inspection operation teaching program. The robot control unit 24B drives the inspection robot MC2, reads a weld bead (a welding portion) on the workpiece Wk22, and executes the bead appearance inspection based on the created inspection program.

The processor 21B of the robot control device 2B transmits a positional deviation amount of the workpiece Wk21 in the inspection coordinate system ΣW2 to the robot control device 2A.

The processor 21A of the robot control device 2A converts the positional deviation amount of the workpiece Wk21 in the inspection coordinate system ΣW2 transmitted from the robot control device 2B into a positional deviation amount of the workpiece Wk21 in the welding coordinate system ΣW1. The processor 21A of the robot control device 2A corrects a position of a teaching point included in a welding operation teaching program corresponding to the workpiece Wk21 based on the positional deviation amount of the workpiece Wk21 in the welding coordinate system ΣW1.

The main welding program creation unit 23A creates a main welding program for executing main welding on the workpiece Wk21, based on the corrected welding operation teaching program. The robot control unit 24A drives the welding robot MC1 based on the created main welding program. The welding robot MC1 executes main welding on the workpiece Wk21 based on position information of a welding line corresponding to the workpiece Wk21.

The processor 21B calculates the positional deviation amount of the workpiece Wk21 in the welding coordinate system ΣW1. The processor 21B may transmit the calculated positional deviation amount of the workpiece Wk21 in the welding coordinate system ΣW1 to the robot control device 2A.

In such a case, the processor 21A of the robot control device 2A corrects the position of the teaching point included in the welding operation teaching program corresponding to the workpiece Wk21 based on the positional deviation amount of the workpiece Wk21 transmitted from the robot control device 2B. The main welding program creation unit 23A creates the main welding program for executing main welding on the workpiece Wk21, based on the corrected welding operation teaching program.

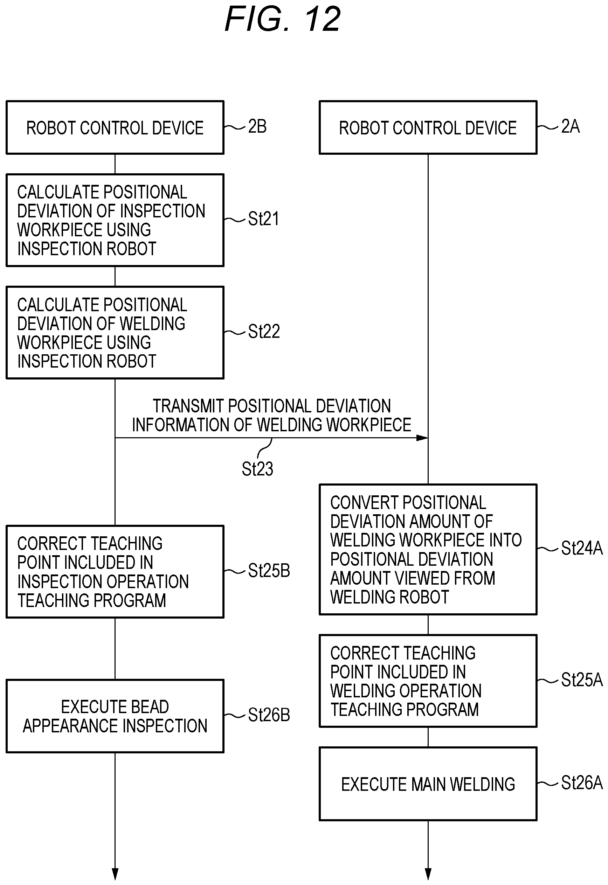

Next, a correction procedure of a teaching program according to the modification of Embodiment 1 will be described with reference to FIG. 12. FIG. 12 is a sequence diagram illustrating a first modification procedure example of a teaching program executed by the two robot control devices 2A and 2B in the modification of Embodiment 1. In the following description, in order to make the description easy to understand, the workpiece Wk21 (see FIGS. 10 and 11) to be subjected to main welding by the welding robot MC1 is referred to as a "welding workpiece", and the workpiece Wk22 (see FIGS. 10 and 11) to be subjected to bead appearance inspection by the inspection robot MC2 is referred to as an "inspection workpiece".

The robot control device 2B drives the inspection robot MC2 to calculate a position of the inspection workpiece based on three-dimensional shape data of the inspection workpiece read by the sensor 4. The robot control device 2B calculates a difference (a positional deviation amount) between the calculated position of the inspection workpiece and a position of the inspection workpiece included in workpiece information of the inspection workpiece (St21). The positional deviation amount calculated by the robot control device 2B is a three-dimensional positional deviation amount, and includes a three-dimensional distance with reference to a corresponding coordinate system and a posture angle (a rotation angle).

The robot control device 2B drives the inspection robot MC2 to calculate a position of the welding robot MC1 based on the three-dimensional shape data of the welding torch 400 or the alignment pattern AP of the welding robot MC1 read by the sensor 4. The robot control device 2B calculates a positional deviation amount of the welding robot MC1 in the inspection coordinate system ΣW2 based on the calculated position of the welding robot MC 1.

The robot control device 2B drives the inspection robot MC2 to calculate a position of the welding workpiece in the inspection coordinate system ΣW2 based on three-dimensional shape of the welding workpiece read by the sensor 4. The robot control device 2B calculates a difference (a positional deviation amount) between the calculated position of the welding workpiece and a position of the welding workpiece included in workpiece information of the welding workpiece (St22).

The robot control device 2B transmits the positional deviation amount of the welding robot MC1 in the inspection coordinate system ΣW2 and a positional deviation amount of the welding workpiece to the robot control device 2A in association with each other (St23).

The robot control device 2A converts the positional deviation amount of the welding workpiece into a positional deviation amount of the welding workpiece in the welding coordinate system ΣW1 and calculates the positional deviation amount based on the positional deviation amount of the welding robot MC1 in the inspection coordinate system ΣW2 transmitted from the robot control device 2B and the positional deviation amount of the welding workpiece (St24A).

The robot control device 2A corrects a position of a teaching point included in a welding operation teaching program corresponding to the welding workpiece based on the positional deviation amount of the welding workpiece in the welding coordinate system ΣW1 (St25A). The robot control device 2A creates a main welding program based on the corrected welding operation teaching program. The robot control device 2A drives the welding robot MC1 using the created main welding program to execute main welding to the welding workpiece (St26A).

The robot control device 2B corrects a position of a teaching point included in an inspection operation teaching program corresponding to the inspection workpiece based on the calculated positional deviation amount of the inspection workpiece (St25B). The robot control device 2B creates an inspection program using the corrected inspection operation teaching program. The robot control device 2B drives the inspection robot MC2 using the created inspection program to execute the bead appearance inspection on the inspection workpiece (St26B).

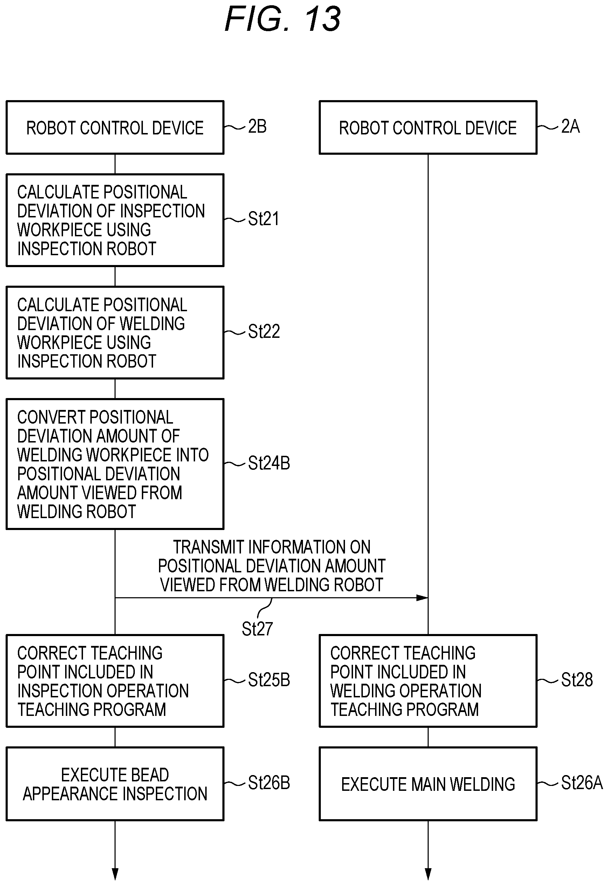

Next, another correction procedure of the teaching program in the modification of Embodiment 1 will be described with reference to FIG. 13. FIG. 13 is a sequence diagram illustrating a second correction procedure example of the teaching program executed by the two robot control devices 2A and 2B according to the modification of Embodiment 1. In the following description, in order to make the description easy to understand, the same processes as those illustrated in FIG. 12 are denoted by the same reference numerals, and the description thereof is omitted.

The robot control device 2B converts the positional deviation amount of the welding workpiece in the inspection coordinate system ΣW2 into the positional deviation amount of the welding workpiece in the welding coordinate system ΣW1 and calculates the positional deviation amount (St24B). The robot control device 2B transmits the calculated positional deviation amount of the welding workpiece in the welding coordinate system ΣW1 to the robot control device 2A (St27).

The robot control device 2A corrects a position of a teaching point included in a welding operation teaching program corresponding to the welding workpiece based on the positional deviation amount of the welding workpiece in the welding coordinate system ΣW1 transmitted from the robot control device 2B (St28).

As described above, the welding system 100 according to the modification of Embodiment 1 can calculate a positional deviation amount of each workpiece (that is, the welding workpiece and the inspection workpiece) even when a robot (the welding robot MC1) that executes the main welding step on the welding workpiece (the workpiece Wk21) and a robot (the inspection robot MC2) that executes the bead appearance inspection on the produced inspection workpiece (the workpiece Wk22) are different from each other. Each of the robot control devices 2A and 2B can correct the position of each teaching point included in the corresponding teaching program based on the calculated positional deviation amount of each workpiece (that is, the welding workpiece and the inspection workpiece).

Accordingly, each of the robot control devices 2A and 2B can more efficiently correct the teaching points of the teaching program used by the plurality of different robots (that is, the welding robot MC1 and the inspection robot MC2).

As described above, the robot control device 2B according to Embodiment 1 includes: the communication unit 20B (an example of an acquisition unit) configured to acquire, from the inspection robot MC2 that inspects the workpiece Wk to be produced by welding, information (for example, three-dimensional shape data, image data) on positions of the workpiece Wk and the welding robot MC1 that executes welding; the processor 21B (an example of a calculation unit) configured to calculate a position of the workpiece Wk and a position of the welding robot MC1 based on the information on the positions of the workpiece Wk and the welding robot MC1; the processor 21B (an example of a conversion unit) configured to convert a position of the workpiece with respect to the inspection robot MC2 into a position of the workpiece Wk with respect to the welding robot MC1; the processor 21B (an example of a correction unit) configured to correct a position of a teaching point included in a welding operation teaching program (an example of a welding teaching program) used for welding based on the position of the workpiece Wk with respect to the welding robot MC1, and correct a position of a teaching point included in an inspection operation teaching program (an example of an inspection teaching program) used for inspection on the produced workpiece Wk based on the position of the workpiece Wk with respect to the inspection robot MC2; and the communication unit 20B (an example of an output unit) configured to output the corrected welding operation teaching program.

Accordingly, even when a robot (welding robot MC1) that executes the main welding step to the workpiece Wk and a robot (inspection robot MC2) that executes the bead appearance inspection on the produced workpiece Wk are different from each other, the robot control device 2B according to Embodiment 1 can execute position correction of the teaching point included in the welding operation teaching program and position correction of the teaching point included in the inspection operation teaching program by calculating a relative position of the workpiece Wk with respect to the welding robot MC1 and a relative position of the workpiece Wk with respect to the inspection robot MC2. Accordingly, the robot control device 2B can more efficiently correct teaching points included in teaching programs used in a plurality of different robots (that is, the welding robot MC1 and the inspection robot MC2).

In addition, the processor 21B of the robot control device 2B according to Embodiment 1 calculates a positional deviation amount of the welding robot MC1 and a positional deviation amount of the workpiece Wk, corrects the position of the welding robot MC1 and the position of the workpiece Wk, and executes correction of the welding operation teaching program based on the positional deviation amount of the welding robot MC1 and the positional deviation amount of the workpiece Wk and correction of the inspection operation teaching program based on the positional deviation amount of the workpiece Wk. Accordingly, the robot control device 2B according to Embodiment 1 can calculate a positional deviation amount (that is, a correction value of the teaching point) of the workpiece Wk with respect to each robot even when the robot (the welding robot MC1) that executes the main welding step on the workpiece Wk and a robot (the inspection robot MC2) that executes the bead appearance inspection on the produced workpiece Wk are different from each other.

The processor 21B of the robot control device 2B according to Embodiment 1 converts the position of the workpiece Wk with respect to the inspection robot MC2 into the position of the workpiece Wk with respect to the welding robot MC 1 based on a sum of the vector VC 11 (an example of a first vector) from the corrected position of the welding robot MC1 toward a position of the inspection robot MC2 and the vector VC12 (an example of a second vector) from the position of the inspection robot MC2 toward the corrected position of the workpiece Wk. Accordingly, the robot control device 2B according to Embodiment 1 can calculate a position of the workpiece Wk with respect to each robot even when a robot (the welding robot MC1) that executes the main welding step on the workpiece Wk and a robot (the inspection robot MC2) that executes the bead appearance inspection on the produced workpiece Wk are different from each other.

The communication unit 20B of the robot control device 2B according to Embodiment 1 acquires first input data related to the shape of the workpiece Wk and second input data related to the shape of the welding robot MC1. The processor 21B calculates a position of the workpiece Wk based on the first input data, and calculates a position of the welding robot MC1 based on the second input data. Accordingly, the robot control device 2B according to Embodiment 1 can calculate a posture angle and a position of the workpiece Wk based on the first input data related to the shape of the workpiece Wk and a posture angle and a position of the welding robot MC1 based on the second input data related to the shape of the welding robot MC1. Accordingly, the robot control device 2B can correct the positions of the teaching points included in the welding operation teaching program and the inspection operation teaching program with higher accuracy.

The second input data of the robot control device 2B according to Embodiment 1 is data related to the shape of the welding torch 400 included in the welding robot MC1. The processor 21B calculates a position of the welding robot MC1 based on the shape of the welding torch 400. Accordingly, the robot control device 2B according to Embodiment 1 can calculate a position of the workpiece Wk with respect to the welding torch 400 of the welding robot MC1 that executes the main welding on the workpiece Wk.

The processor 21B of the robot control device 2B according to Embodiment 1 calculates a posture angle and a position of at least one welding torch 400 based on the shape of the welding torch 400, and calculates a position of the welding robot MC1 based on the calculated posture angle and position. Accordingly, the robot control device 2B according to Embodiment 1 can calculate a position of the workpiece Wk with respect to the welding torch 400 of the welding robot MC1 that executes the main welding on the workpiece Wk.

The processor 21B of the robot control device 2B according to Embodiment 1 calculates a posture angle of at least one welding torch 400 and a position of at least one welding torch 400 based on the shape of the welding torch 400, and calculates a position of the welding robot MC1 based on the calculated posture angle and position. Accordingly, the robot control device 2B according to Embodiment 1 can calculate a posture angle and a position of the welding torch 400 with higher accuracy, and calculate a position of the workpiece Wk with respect to the welding torch 400 of the welding robot MC1 that executes the main welding on the workpiece Wk.

The second input data of the robot control device 2B according to Embodiment 1 is three-dimensional shape data of the alignment pattern AP attached to the welding robot MC1. In the alignment pattern AP, two holes HO1 and HO2 having different sizes are formed. The processor 21B calculates a position of the welding robot MC1 based on the positions of the two holes HO1 and HO2. Accordingly, the robot control device 2B according to Embodiment 1 can calculate a position of the welding robot MC1 with higher accuracy based on the alignment pattern AP.

The processor 21B of the robot control device 2B according to Embodiment 1 calculates a position of the welding robot MC1 based on the respective center positions CT1 and CT2 of the two holes HO1 and HO2. Accordingly, the robot control device 2B according to Embodiment 1 can calculate an angle posture and a position of the welding robot MC1 with higher accuracy based on the alignment pattern AP.

As described above, the welding system 100 (an example of an offline teaching system) including the robot control devices 2A and 2B according to the modification of Embodiment 1 includes the robot control device 2A (an example of a welding robot control device) configured to control the welding robot MC 1 that produces the workpiece Wk21 (an example of a first workpiece) by welding, and the robot control device 2B (an example of an inspection robot control device) configured to control the inspection robot MC2 that inspects the produced workpiece Wk22 (an example of a second workpiece). The robot control device 2B acquires information on the positions of the workpiece Wk21, the workpiece Wk22, and the welding robot MC1 with respect to the inspection robot MC2, calculates the positional deviation amounts of the workpiece Wk21 and the workpiece Wk22, corrects a position of a teaching point included in an inspection operation teaching program used for inspection on the workpiece Wk22 based on the positional deviation amount of the workpiece Wk22, and transmits information on the positional deviation amount of the workpiece Wk21 to the robot control device 2A. The robot control device 2A converts the positional deviation amount of the workpiece Wk21 into the positional deviation amount of the workpiece Wk21 with respect to the welding robot MC1 based on information on the positional deviation amount of the workpiece Wk21 transmitted from the robot control device 2B, and corrects a position of a teaching point included in a welding operation teaching program used for welding based on the converted positional deviation amount of the workpiece Wk21.

Accordingly, the welding system 100 according to the modification of Embodiment 1 can calculate a positional deviation amount of each workpiece (that is, the welding workpiece and the inspection workpiece) even when a robot (the welding robot MC1) that executes the main welding step on the welding workpiece (the workpiece Wk21) and a robot (the inspection robot MC2) that executes the bead appearance inspection on the produced inspection workpiece (the workpiece Wk22) are different from each other. Each of the robot control devices 2A and 2B can correct the position of each teaching point included in the corresponding teaching program based on the calculated positional deviation amount of each workpiece (that is, the welding workpiece and the inspection workpiece). Accordingly, each of the robot control devices 2A and 2B can more efficiently correct the teaching points included in the teaching program used by the plurality of different robots (that is, the welding robot MC1 and the inspection robot MC2).

As described above, the welding system 100 including the robot control devices 2A and 2B according to the modification of Embodiment 1 includes the robot control device 2A (an example of a welding robot control device) configured to control the welding robot MC1 that produces the workpiece Wk21 (an example of a first workpiece) by welding, and the robot control device 2B (an example of an inspection robot control device) configured to control the inspection robot MC2 that inspects the produced workpiece Wk22 (an example of a second workpiece). The robot control device 2B acquires the information on the positions of the workpiece Wk21, the workpiece Wk22, and the welding robot MC1 with respect to the inspection robot MC2, calculates the positional deviation amounts of the workpiece Wk21 and the workpiece Wk22, corrects a position of a teaching point included in the inspection operation teaching program used for the inspection on the workpiece Wk22 based on the positional deviation amount of the workpiece Wk22, converts the positional deviation amount of the workpiece Wk21 into the positional deviation amount of the workpiece Wk21 with respect to the welding robot MC1 based on the information on the positional deviation amount of the workpiece Wk21, and transmits the information to the robot control device 2A. The robot control device 2A corrects a position of a teaching point included in the welding operation teaching program (a welding teaching program) used for welding based on the positional deviation amount of the workpiece Wk21 transmitted from the robot control device 2B.

Accordingly, the welding system 100 according to the modification of Embodiment 1 can calculate a positional deviation amount of each workpiece (that is, the welding workpiece and the inspection workpiece) even when a robot (the welding robot MC1) that executes the main welding step on the welding workpiece (the workpiece Wk21) and a robot (the inspection robot MC2) that executes the bead appearance inspection on the produced inspection workpiece (the workpiece Wk22) are different from each other. Each of the robot control devices 2A and 2B can correct the position of each teaching point included in the corresponding teaching program based on the calculated positional deviation amount of each workpiece (that is, the welding workpiece and the inspection workpiece). Accordingly, each of the robot control devices 2A and 2B can more efficiently correct the teaching points included in the teaching program used by the plurality of different robots (that is, the welding robot MC1 and the inspection robot MC2).

Although various embodiments have been described above with reference to the drawings, it is needless to say that the present disclosure is not limited to these embodiments. It is apparent to those skilled in the art that various changes, corrections, substitutions, additions, deletions, and equivalents can be conceived within the scope of the claims, and it should be understood that such changes, corrections, substitutions, additions, deletions, and equivalents also fall within the technical scope of the present disclosure. In addition, components in the various embodiments described above may be combined freely in a range without deviating from the spirit of the invention.

The present application is based on Japanese Patent Application No. 2022-047240 filed on Mar. 23, 2022, and the contents thereof are incorporated herein by reference.

### INDUSTRIAL APPLICABILITY

The present disclosure is useful as an offline teaching device and an offline teaching system that more efficiently correct teaching points included in teaching programs used by different robots.

### REFERENCE SIGNS LIST

1 host device
2A, 2B robot control device
3 inspection control device
4 sensor
10, 20A, 20B, 30 communication unit
11, 21A, 21B, 31 processor
12, 22A, 22B, 32 memory
23A main welding program creation unit
23B inspection program creation unit
24A, 24B robot control unit
25A power supply control unit
100 welding system
200A, 200B manipulator
300 wire feeding device
301 welding wire
400 welding torch
500 power supply device
AP alignment pattern
MC1 welding robot
MC2 inspection robot
MN1, MN2 monitor
Wk, Wk21, Wk22 workpiece

## Claims

1. An offline teaching device comprising:
an acquisition unit configured to acquire, from an inspection robot that inspects a workpiece to be produced by welding, information on positions of the workpiece and a welding robot that executes the welding;
a calculation unit configured to calculate a position of the workpiece and a position of the welding robot based on the information on the positions of the workpiece and the welding robot;
a conversion unit configured to convert a position of the workpiece with respect to the inspection robot into a position of the workpiece with respect to the welding robot;
a correction unit configured to correct a position of a teaching point included in a welding teaching program used for the welding based on the position of the workpiece with respect to the welding robot and correct a position of a teaching point included in an inspection teaching program used for the inspection of the produced workpiece based on the position of the workpiece with respect to the inspection robot; and
an output unit configured to output the corrected welding teaching program.

2. The offline teaching device according to claim 1, wherein
the calculation unit is configured to
calculate a positional deviation amount of the welding robot and a positional deviation amount of the workpiece and correct the position of the welding robot and the position of the workpiece, and
the conversion unit is configured to
correct the welding teaching program based on the positional deviation amount of the welding robot and the positional deviation amount of the workpiece and correct the inspection teaching program based on the positional deviation amount of the workpiece.

3. The offline teaching device according to claim 2, wherein
the conversion unit is configured to convert the position of the workpiece with respect to the inspection robot into the position of the workpiece with respect to the welding robot based on a sum of a first vector directed from the corrected position of the welding robot to a position of the inspection robot and a second vector directed from a position of the inspection robot to the corrected position of the workpiece.

4. The offline teaching device according to claim 1, wherein
the acquisition unit is configured to acquire first input data related to a shape of the workpiece and second input data related to a shape of the welding robot, and
the calculation unit is configured to calculate the position of the workpiece based on the first input data and calculate the position of the welding robot based on the second input data.

5. The offline teaching device according to claim 4, wherein
the second input data is data related to a shape of a welding torch included in the welding robot, and
the calculation unit is configured to calculate the position of the welding robot based on the shape of the welding torch.

6. The offline teaching device according to claim 5, wherein
the calculation unit is configured to calculate at least one posture angle and position of the welding torch based on the shape of the welding torch, and calculate the position of the welding robot based on the calculated posture angle and position.

7. The offline teaching device according to claim 5, wherein
the calculation unit is configured to calculate at least one posture angle of the welding torch and at least one position of the welding torch based on the shape of the welding torch, and calculate the position of the welding robot based on the calculated posture angle and position.

8. The offline teaching device according to claim 4, wherein
the second input data is three-dimensional shape data of a pattern attached to the welding robot,
the pattern is formed with two holes having different sizes, and
the calculation unit is configured to calculate the position of the welding robot based on positions of the two holes.

9. The offline teaching device according to claim 8, wherein
the calculation unit is configured to calculate the position of the welding robot based on the respective center positions of the two holes.

10. An offline teaching system comprising:
a welding robot control device configured to control a welding robot that produces a first workpiece by welding; and
an inspection robot control device configured to control an inspection robot that inspects a produced second workpiece, wherein
the inspection robot control device is configured to
acquire information on positions of the first workpiece, the second workpiece, and the welding robot with respect to the inspection robot, and
calculate positional deviation amounts of the first workpiece and the second workpiece, and
correct a position of a teaching point included in an inspection teaching program used for inspection of the second workpiece based on the positional deviation amount of the second workpiece and transmit information of the positional deviation amount of the first workpiece to the welding robot control device, and
the welding robot control device is configured to
convert the positional deviation amount of the first workpiece into a positional deviation amount of the first workpiece with respect to the welding robot based on the information of the positional deviation amount of the first workpiece transmitted from the inspection robot control device; and
correct a position of a teaching point included in a welding teaching program used for the welding based on the converted positional deviation amount of the first workpiece.

11. An offline teaching system comprising:
a welding robot control device configured to control a welding robot that produces a first workpiece by welding; and
an inspection robot control device configured to control an inspection robot that inspects a produced second workpiece, wherein
the inspection robot control device is configured to
acquire information on positions of the first workpiece, the second workpiece, and the welding robot with respect to the inspection robot,
calculate positional deviation amounts of the first workpiece and the second workpiece, correct a position of a teaching point included in an inspection teaching program used for inspection of the second workpiece based on the positional deviation amount of the second workpiece, and
convert the positional deviation amount of the first workpiece into a positional deviation amount of the first workpiece with respect to the welding robot based on information of the positional deviation amount of the first workpiece, and transmit the positional deviation amount to the welding robot control device,
the welding robot control device is configured to
correct a position of a teaching point included in a welding teaching program used for the welding based on the positional deviation amount of the first workpiece transmitted from the inspection robot control device.
